# EUROPEAN PATENT APPLICATION

(11) **EP 1 176 529 A1**
(43) Date of publication of application: **30.01.2002**
(21) Application number: 01118388.6
(22) Date of filing: 27.07.2001
(51) Int. Cl.: G06F 17/60

(54) **Accounting processing method**

(30) Priority: 28.07.2000 JP 2000230031
(71) Applicant: MATSUSHITA ELECTRIC INDUSTRIAL CO., LTD., Kadoma-shi, Osaka 571-8501 (JP)
(72) Inventor: Nishi, Hiroyuki, Tokyo 168-0065 (JP); Nakamura, Yasuhiro, Kawasaki-shi, Kanagawa 215-0023 (JP); Okamura, Kazuo, Kawasaki-shi, Kanagawa 213-0013 (JP); Kusumi, Yuki, Kashiba-shi, Nara 639-0254 (JP)
(74) Representative: Betten & Resch

(57) **Abstract**

An accounting processing method for a service to be realized by an electronic appliance comprises the steps of: taking out a calculation formula from calculation formula storage means for storing a calculation formula which calculates an accounting fee for the use of said electronic appliance; and calculating an accounting fee on the basis of said calculation formula which was taken out in said previous method step.

## Description

### FIELD OF THE INVENTION

The present invention relates to an accounting processing method for a service that is realized by an electronic appliance. Specifically, the present invention relates to an accounting processing method for a partial usage of the electronic appliance such as a usage of a function, an operating button and an accumulation medium of the electronic appliance.

### BACKGROUND OF THE INVENTION

Conventionally, there have been no accounting processing method for a partial usage of the electronic appliance. A service by use of the electronic appliance will be briefly explained below. Additionally, it will be described how the accounting processing of this service has been conventionally provided.

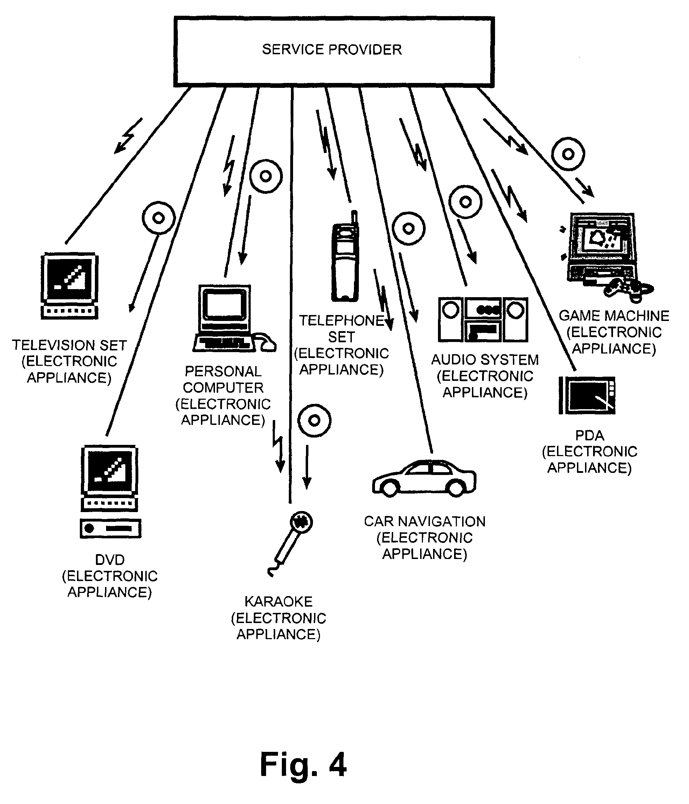

Conventionally, a service by use of the electronic appliance has been provided. For example, as shown in FIG. 4, a service provider, i.e., a service providing agent has provided a TV broadcast, a rental video program, a rental DVD and a rental CD. Further, in the Internet, an Internet service provider or the like has provided the connection to the Internet with charge, has provided the information via a portable telephone, a PDA and a car navigation or the like and provided a game program through a communication line.

The accounting processing method is as follows. In the case of a pay television or the like, a monthly audience fee was fixed in advance for the accounting processing. In the case of a rental video program or the like, the fee was accounted at a counter of a rental video program shop when a rental service was provided. In the case of the information service via the portable telephone or the like, a communication agent integrally charges the information fee and the communication fee for each service, which is designated by the service provider to collect the fee from a user in place of an information provider.

### OBJECTS TO BE SOLVED BY THE INVENTION

According to a conventional accounting processing method, the respective service providers charge a fee for each service. In the case of an interactive multimedia service terminal or the like for customizing a plurality of services for each service terminal, many kinds of accounting processing are needed for one service terminal, so that the accounting processing becomes complicated.

Conventionally, it is necessary to perform the accounting processing according to various services, for example, a telephone service, Internet service, a general television broadcast, a video-on-demand system, a news-on-demand system, a music-on-demand system, an on-line shopping, a telecommunication karaoke, an electronic money payment, a home banking, an electronic commerce (EC), a home trade, a home medical care system, a telecommunication game, multimedia newspaper and a public service such as issue of a resident card or the like through one multimedia terminal. Therefore, it was difficult for a conventional accounting processing method to effectively treat the accounting processing of various services.

Further, as an entity for providing one service, a content provider, a communication agent and a device provider and the like are considered. However, it was difficult to distribute a profit from a service fee in compensation for the service for each service providing entity. Further, it was difficult for an advertising agent to install a reproduction apparatus, a function and a button for a commercial message only in a home.

### SUMMARY OF THE INVENTION

In order to solve these problems, the present invention provides an accounting processing method for performing an accounting processing by using a calculation formula to calculate the charged fee according to the usage of a function of an electronic appliance for realizing a service, an operating button thereof and an accumulation medium thereof or the like.

The present invention provides an accounting processing method as defined in claims 1 and 6 and an accounting processing system as claimed in claims 12, 15 and 16. Preferred embodiments are described in the dependent claims.

As an accounting processing method for a service to be realized by the electronic appliance, a method in the case of charging the fee for the usage of the electronic appliance itself, a method in the case of charging the fee for the usage of a function of the electronic appliance, a method in the case of charging the fee for the usage of a button to operate the electronic appliance and a method in the case of charging the fee for the usage of a disk to serve as an information accumulation medium of the electronic appliance and the like are considered.

Further, there is a case that a fee is charged in compensation of lending of the electronic appliance in addition to a case that a fee is charged in compensation of a service itself. This case is applied to a case that an agent for providing a service is charged. In the case that an electronic appliance, a function of the electronic appliance, an operating button for operating the electronic appliance and a disk which is an accumulation medium of the electronic appliance are lent to the agent for providing a service and the agent freely customizes them according to the service that the agent provides to have the service offering means for an end user, it is convenient to charge the agent for offering a service in compensation for lending them.

### BRIEF DESCRIPTION OF THE DRAWINGS

- FIG. 1: illustrates an accounting processing method by the use of a calculation formula for calculating the accounting fee for the usage of an electronic appliance according to the present invention.
- FIG. 2: shows a flow for performing the accounting processing by using a calculation formula for calculating the accounting fee for the usage of an electronic appliance according to the present invention.
- FIG. 3: illustrates an accounting processing apparatus for performing the accounting processing by using a calculation formula for calculating the accounting fee for the usage of an electronic appliance according to the present invention and a function of an electronic appliance associated with this accounting processing apparatus.
- FIG. 4: is a conceptual diagram for illustrating a service to be realized by an electronic appliance.
- FIG. 5: illustrates an accounting processing method by the use of a calculation formula for calculating the accounting fee for the usage of a function according to the present invention.
- FIG. 6: shows a flow for performing the accounting processing by using a calculation formula for calculating the accounting fee for the usage of a function according to the present invention.
- FIG. 7: illustrates an accounting processing apparatus for performing the accounting processing by using a calculation formula for calculating the accounting fee for the usage of a function according to the present invention and a function of an electronic appliance associated with this accounting processing apparatus.
- FIG. 8: illustrates an accounting processing method by the use of a calculation formula for calculating the accounting fee for the usage of an operating button according to the present invention.
- FIG. 9: shows a flow for performing the accounting processing by using a calculation formula for calculating the accounting fee for the usage of an operating button according to the present invention.
- FIG. 10: illustrates an accounting processing apparatus for performing the accounting processing by using a calculation formula for calculating the accounting fee for the usage of an operating button according to the present invention and a function of an electronic appliance associated with this accounting processing apparatus.
- FIG. 11: illustrates an accounting processing method for performing the accounting processing by the use of a calculation formula for calculating the accounting fee for the usage of an accumulation medium according to the present invention.
- FIG. 12: shows a flow for performing the accounting processing by using a calculation formula for calculating the accounting fee for the usage of an accumulation medium according to the present invention.
- FIG. 13: illustrates an accounting processing apparatus for performing the accounting processing by using a calculation formula for calculating the accounting fee for the usage an accumulation medium according to the present invention and a function of an electronic appliance associated with this accounting processing apparatus.
- FIG. 14: illustrates a parameter of a calculation formula for calculating the accounting fee for the usage of a function of an electronic appliance, a button of an electronic appliance and a disk of an electronic appliance according to the present invention.
- FIG. 15: illustrates an accounting processing method for charging a manager of an electronic appliance by the use of a calculation formula for calculating the accounting fee for the setting of an electronic appliance according to the present invention.
- FIG. 16: shows a flow of an accounting processing method for charging a manager of an electronic appliance with the accounting fee for setting of the electronic appliance according to the present invention.
- FIG. 17: illustrates an accounting processing apparatus for calculating the accounting fee for the setting of an electronic appliance and charging a manager of an electronic appliance and a function of an electronic appliance associated with this accounting processing apparatus according to the present invention.
- FIG. 18: illustrates an accounting processing method for calculating the accounting fee for embedding of a function of an electronic appliance and charging a manager of an electronic appliance according to the present invention.
- FIG. 19: shows a flow of an accounting processing method for calculating the accounting fee for the embedding of a function of an electronic appliance and charging a manager of an electronic appliance according to the present invention.
- FIG. 20: illustrates an accounting processing apparatus for calculating the accounting fee for embedding of a function of an electronic appliance and charging a manager of an electronic appliance and a function of an electronic appliance associated with this accounting processing apparatus according to the present invention.
- FIG. 21: illustrates an accounting processing method for calculating the accounting fee for the setting of a button and charging a manager of an electronic appliance according to the present invention.
- FIG. 22: shows a flow of an accounting processing method for calculating the accounting fee for the setting of a button and charging a manager of an electronic appliance according to the present invention.
- FIG. 23: illustrates an accounting processing apparatus for calculating the accounting fee for the setting of a button and charging a manager of an electronic appliance or a remote controller and a function of a remote controller associated with this accounting processing apparatus according to the present invention.
- FIG. 24: illustrates an example of a function block of an accounting processing system according to the present invention.
- FIG. 25: shows a flow of an accounting processing of an accounting processing system according to the present invention.
- FIG. 26: illustrates an example of a function block of an accounting processing system according to the present invention.
- FIG. 27: shows an example of a flow of an accounting processing of an accounting processing system according to the present invention.
- FIG. 28: illustrates an example of a function block of an accounting processing system according to the present invention.
- FIG. 29: shows an example of a flow of an accounting processing of an accounting processing system according to the present invention.
- FIG. 30: illustrates an example of a function block of an accounting processing system according to the present invention.
- FIG. 31: illustrates an example of a function block of an accounting processing system according to the present invention.
- FIG. 32: illustrates an example of a function block of an accounting processing system according to the present invention.

### DETAILED DESCRIPTION OF PREFERRED EMBODIMENTS

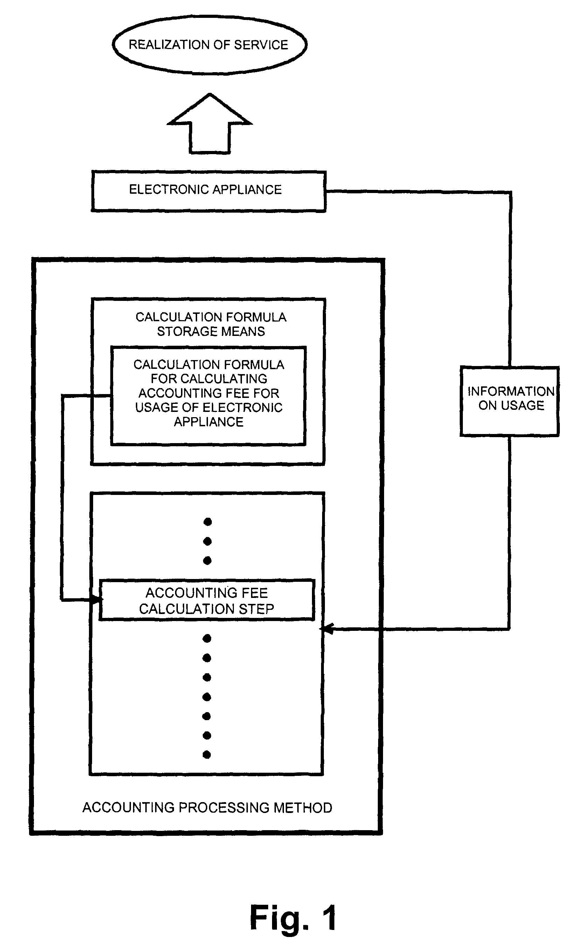

At first, an embodiment according to the present invention for charging for the usage of the electronic appliance will be described below. FIG. 1 illustrates a structure of an accounting processing method of this invention. The electronic appliance of this invention includes an electronic appliance constituting a part of a multimedia terminal in addition to a multimedia terminal or the like. The electronic appliance constituting a part of a multimedia terminal includes "a screen display device", "a disk as an accumulation medium", "a remote controller button", "VRAM (video ram)" and "a network interface" and the like of the multimedia terminal. Further, the network interface includes a modem such as an Ethernet interface, a V90 modem and the like, an IEEE 1394 interface, a DV (digital video) terminal and a SD card interface and the like. That is because these can provide discriminating service. Additionally, this accounting processing method has calculation formula storage means and an accounting fee calculation step. The "calculation formula storage means" stores a calculation formula for calculating an accounting fee for the usage of the electronic appliance. In this case, one calculation formula or plural calculation formulas may be applied. Additionally, the calculation formula can be easily changed or replaced by an electronic processing. A type of the calculation formula is selected according to a service to be provided by the electronic appliance. If a person to provide the electronic appliance and a person to perform the accounting processing are the same, it is possible to easily know what service has been realized and provided in each electronic appliance and how the electronic appliance has been used. Further, even if they are different, it is possible to know what service is realized and provided in each electronic appliance and how the electronic appliance is used in advance upon performing the electronic processing or performing the accounting processing by communication. Accordingly, the calculation formula is easily selected.

According to the "accounting fee calculation step", the accounting fee is calculated on the basis of the calculation formula that is stored in this calculation formula storage means. In this case, one calculation formula or plural calculation formulas may be used. Further, according to the calculation formula to be used, information on the usage of the electronic appliance is employed.

For example, in the case that the electronic appliance comprises a "screen display device", a specific parameter to be used in the calculation formula includes a place where the screen to be used is located, a size thereof and an order that the information to be displayed on the screen is arranged and the like. In the case that the electronic appliance is an "accumulation medium", a specific parameter to be used in the calculation formula is a usage capacity. If the electronic appliance is a "remote controller operating button", a specific parameter to be used in the calculation formula includes a place of the button to be arranged on the remote controller and a size of the button and the like. If the electronic appliance is a "VRAM", a specific parameter to be used in the calculation formula is a size thereof or the like. If the electronic appliance is a "network interface", a specific parameter to be used in the calculation formula includes a kind thereof and a transmission rate thereof and the like. The network interface also includes a function for performing an encryption processing. In this case, a specific parameter to be used in the calculation formula is whether this function should be used or not. Further, the number of the electronic appliances to be used by connecting it to the interface is also used as a parameter of the calculation formula.

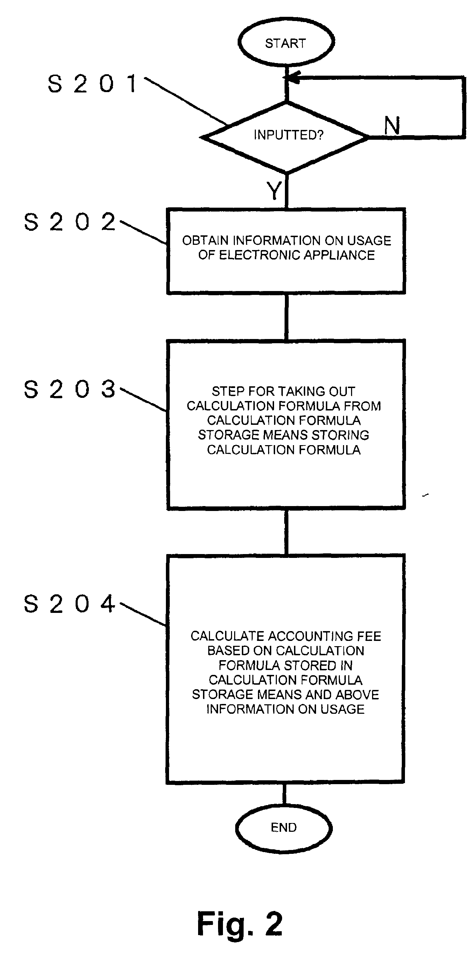

FIG. 2 is a flow chart for illustrating an example of a flow of this processing. At first, waiting until the information for accounting processing is inputted (S201), if it is inputted, then, the information on the usage of the electronic appliance is obtained (S202). Further, this information on the usage of the electronic appliance is not always needed. In the case that this information on the usage of the electronic appliance that realizes the service as an object of the accounting processing is uniformed, it is also possible to select the calculation formula and to perform the accounting processing without using this information in the accounting fee calculation step by use of this calculation formula.

By using this information or the like, the calculation formula is taken out from the calculation formula storage means for storing the calculation formula which calculates the accounting fee for the use of the electronic appliance (S203). Then, on the basis of the calculation formula that is taken out in the above step and the information, the accounting fee is calculated (S204).

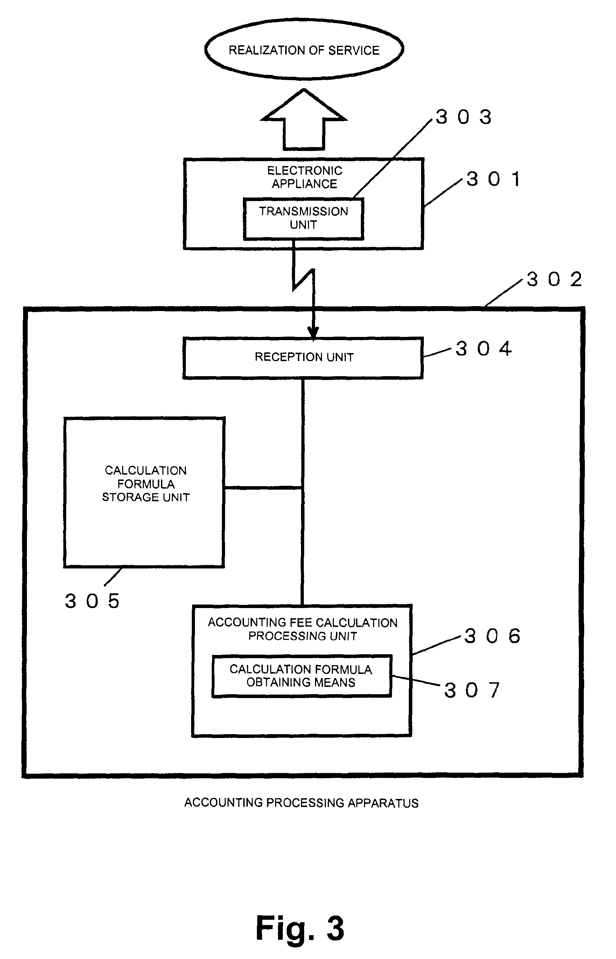

FIG. 3 illustrates an example of a function block of an accounting processing apparatus 302 for performing this accounting processing. As shown in FIG. 3, information on the usage of the service realized by an electronic appliance 301 is transmitted from a transmission unit 303 which is provided in the electronic appliance 301 to the accounting processing apparatus 302 side. In the accounting processing apparatus 302, a reception unit 304 receives this information on the usage of the service realized by an electronic appliance 301. On the basis of this information, calculation formula obtaining means 307 of an accounting fee calculation processing unit 306 obtains an optimum calculation formula from a calculation formula storage unit 305 and performs an arithmetical processing by using this calculation formula at the accounting fee calculation processing unit 306 to calculate the accounting fee. A subject to be an accounting object is specified and the payment processing with respect to the calculated accounting fee is carried out in practice by a method such as an electronic money payment or the like. Further, the accounting fee and the information to be used to calculate the accounting fee are transmitted to the subject of the accounting object through an electronic male or the like.

Thus, the accounting processing is easily electronically performed, so that it becomes possible that the accounting processing is performed everyday or hourly instead of once per month. Accordingly, it is possible to perform the accounting processing according to update and change of the service that is provided by the electronic appliance.

Next, a case that the accounting fee is charged for the use of a function of an electronic appliance will be explained. According to this invention, compensation for the service that is realized by using the function belonged to the electronic appliance is treated by the accounting fee for the use of the function.

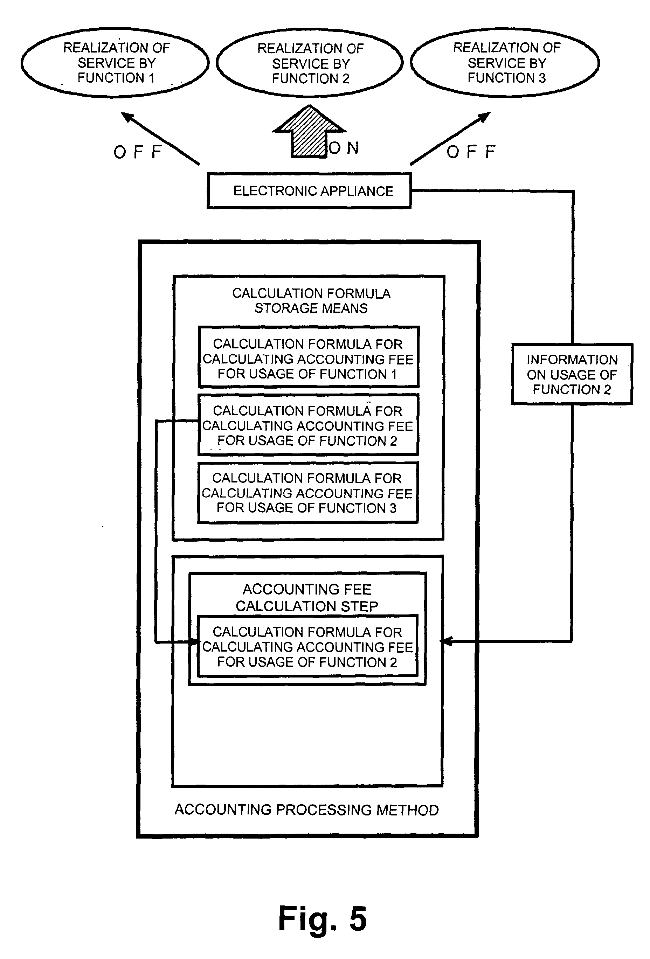

FIG. 5 illustrates an example of this invention. The accounting processing method according to this invention also has calculation formula storage means and an accounting fee calculation step. This invention is characterized in that the calculation formula that is stored in this calculation formula storage means is the means to calculate the accounting fee for the use of one function realized by the electronic appliance. As shown in the example of FIG. 5, assuming that the electronic appliance has functions 1 to 3, if a person who received the service by this electronic appliance receives the service by the function 2, the accounting fee is charged for the usage of the function 2. The "function" is means for realizing the service that is provided through this electronic appliance. For example, various services such as a telephone service, Internet service, a general television broadcast, a video-on-demand system, a news-on-demand system, a music-on-demand system, an on-line shopping, a telecommunication karaoke, an electronic money payment, a home banking, an electronic commerce (EC), a home trade, a home medical care system, a telecommunication game, a multimedia newspaper and a public service such as issue of a resident card and the like are provided in the electronic appliance, so that it is possible to receive these services by using the function.

In this case, as a specific example of the calculation formula, there are considered a case that the accounting fee is 50 yen in the case of using a telecommunication karaoke of the function 1, a case that the accounting fee is 20 yen in the case of using an electronic money payment of the function 2, and a case that the accounting fee is 30 yen in the case of using a home banking of the function 3.

It is assumed that a person who uses the electronic appliance realize, for example, a service such as a video-on-demand system by the function 2 shown in FIG. 5 and enjoys it. In this case, according to the accounting processing method, as shown in FIG. 5, on the basis of the calculation formula for calculating the accounting fee for the usage of the function 2 by the calculation formula storage means of the accounting processing method, the accounting fee in compensation for the service such as a video-on-demand system is calculated. On the basis of the calculation formula that is stored in the calculation formula storage means, the accounting fee is calculated in the accounting fee calculation step.

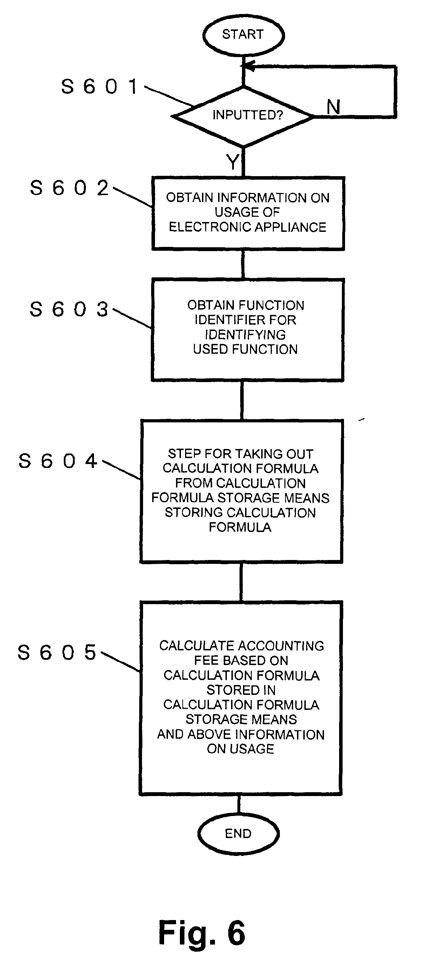

In this case, the functions 1 and 3 are not used, so that they are not the accounting objects. FIG. 6 shows a flow of the processing according to this invention. Waiting until the information for accounting processing is inputted (S601), if it is inputted, then, the information on the usage of the electronic appliance is obtained (S602). The "information on the usage of the electronic appliance" includes the information on the function that is used by the electronic appliance. Then, a function identifier for identifying the used function is obtained (S603). This function identifier is used for associating the used function with the calculation formula for calculating the accounting fee for the usage of the function. Then, the calculation formula is taken out from the calculation formula storage means for storing the calculation formula which calculates the accounting fee for the use of the electronic appliance (S604). Then, on the basis of the calculation formula that is taken out in the above step and the information, the accounting fee is calculated (S605).

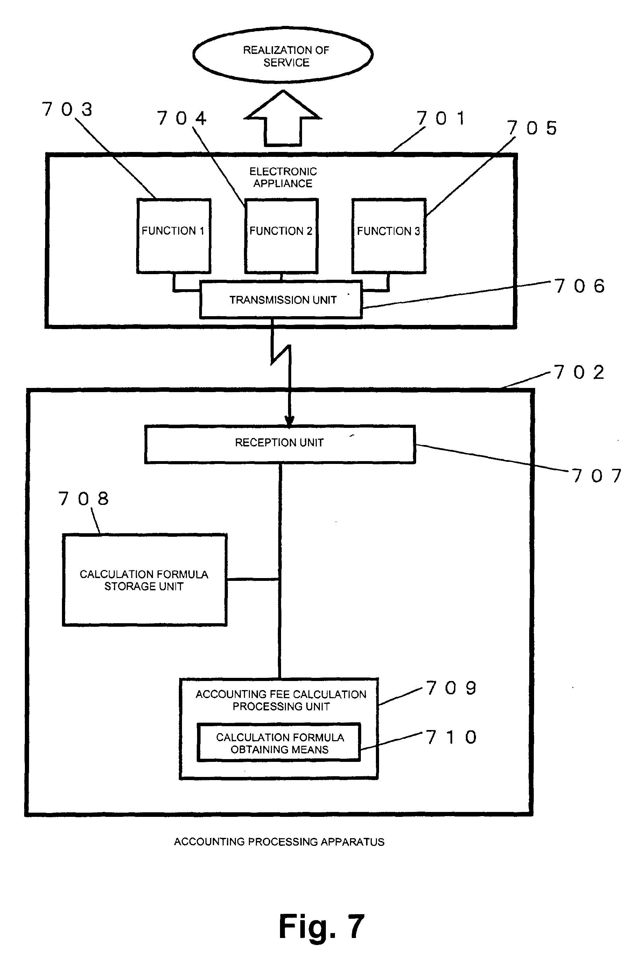

Further, in the case that a plurality of functions are used, the accounting fee may be calculated by using a plurality of calculation formulas, or by using the calculation formula which is predetermined for the usage of a plurality of functions. FIG. 7 illustrates a function of an electronic appliance 701 and a function of an accounting processing apparatus 702. As shown in FIG. 7, the electronic appliance 701 has a plurality of functions for realizing a plurality of services, for example, three functions 703, 704 and 705 from the function 1 to the function 3. Further, the electronic appliance 701 has a transmission unit 706 for transmitting the information on the usage of the electronic appliance 701 including the usage of the function to the accounting processing apparatus 702.

As shown in FIG. 7, the accounting processing apparatus 702 according to this invention has a reception unit 707 for receiving the information on the usage of the electronic appliance 701. On the basis of the information on the usage of the electronic appliance 701 that is received this reception unit 707, calculation formula obtaining means 710 of an accounting fee calculation processing unit 709 selects the calculation formula for calculating the accounting fee for the usage of the function from a calculation formula storage unit 708.

Additionally, the transmission unit 706 of the electronic appliance 701 and the reception unit 707 of the accounting processing apparatus 702 are not always required to directly receive the information, they may receive indirectly receive the information. Further, the information on the usage of the electronic appliance 701 that is transmitted from the transmission 706 of the electronic appliance 701 may be transmitted to the accounting processing apparatus 702 without being processed or it may be transmitted to the accounting processing apparatus 702 after the necessary information is processed. The "necessary information processing" means various information on a person who receives the service by the electronic appliance 701 and the information on the number of referring to a banner advertisement or the like. It is also possible to determine the accounting fee by using these information upon the accounting processing. In response to the number of referring to a banner advertisement, it is possible to change the price reduction rate and the price reduction amount.

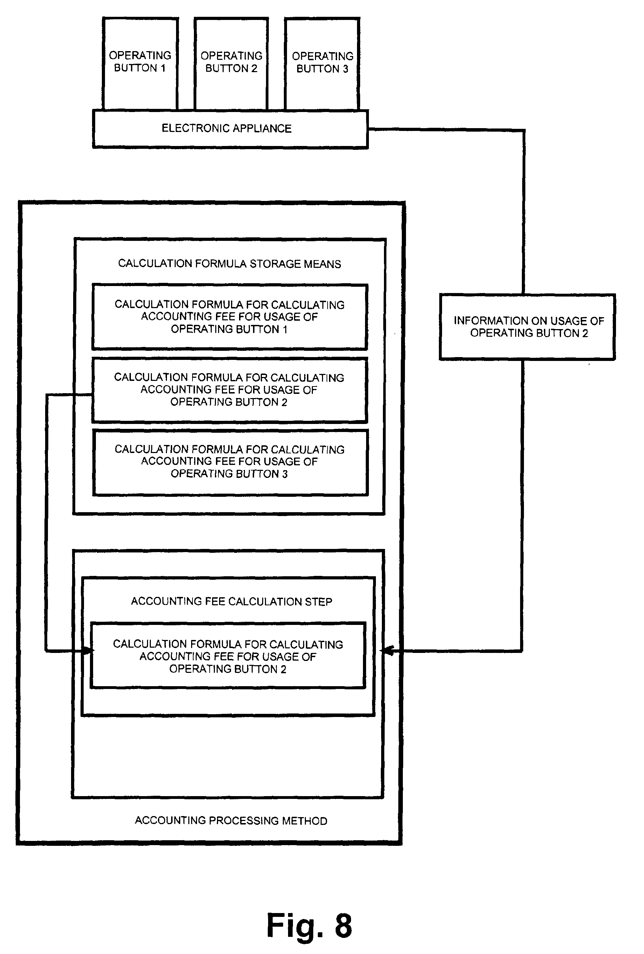

Next, an embodiment according to the invention for charging for the usage of a button to operate an electronic appliance will be described. FIG. 8 illustrates this invention. As shown in FIG. 8, the accounting processing method of this invention also has calculation formula storage means and an accounting fee calculation step. Compared to other invention of the present application, this invention is characterized in that the accounting processing is performed for the usage of the operating button that belongs to the electronic appliance, so that the calculation formula that is stored in the calculation formula storage means is a calculation formula to calculate the accounting fee for the usage of this button.

The "operating button" serves to effect the function of the electronic appliance for realizing various services. In response to "ON" of the operating button, various services are started. For example, by turning a certain operating button "ON", it is possible to enter a specific home page on the Internet which is not open to the public, or to buy and sell in an online trading of a stock.

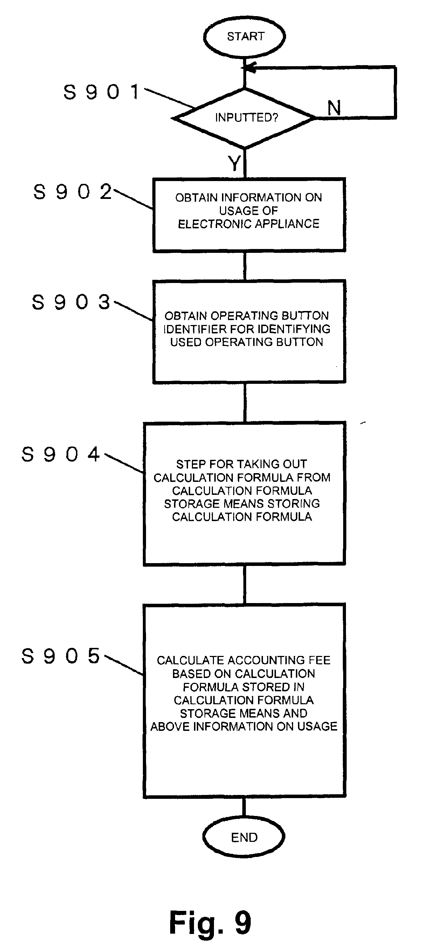

FIG. 9 shows a flow of the processing according to this invention. At first, waiting until the information for accounting processing is inputted (S901), if it is inputted, then, the information on the usage of the electronic appliance is obtained (S902). The "information on the usage of the electronic appliance" includes the information on the usage of the operating button of the electronic appliance. Then, an operating button identifier for identifying the used operating button in the electronic appliance is obtained (S903). This operating button identifier is used for associating the used operating button with the calculation formula for calculating the accounting fee in the accounting fee calculation step. Then, the calculation formula is taken out from the calculation formula storage means for storing the calculation formula which calculates the accounting fee for the use of the electronic appliance (S904). Then, on the basis of the calculation formula that is taken out in the above step and the information on the usage of the operating button, the accounting fee is calculated (S905).

In this case, as calculation formula, a calculation formula such that the accounting fee is 10 yen for each operation of the button, namely, a calculation formula such as the accounting fee = 10 × n (yen) where the number of operating the button is defined as n is considered. Further, the calculation formula may be such that the accounting fee is 20 yen for each operation of the button when the number of operating the button is up to 10 and the accounting fee is 10 yen for each operation of the button when the number of operating the button is 11 and more.

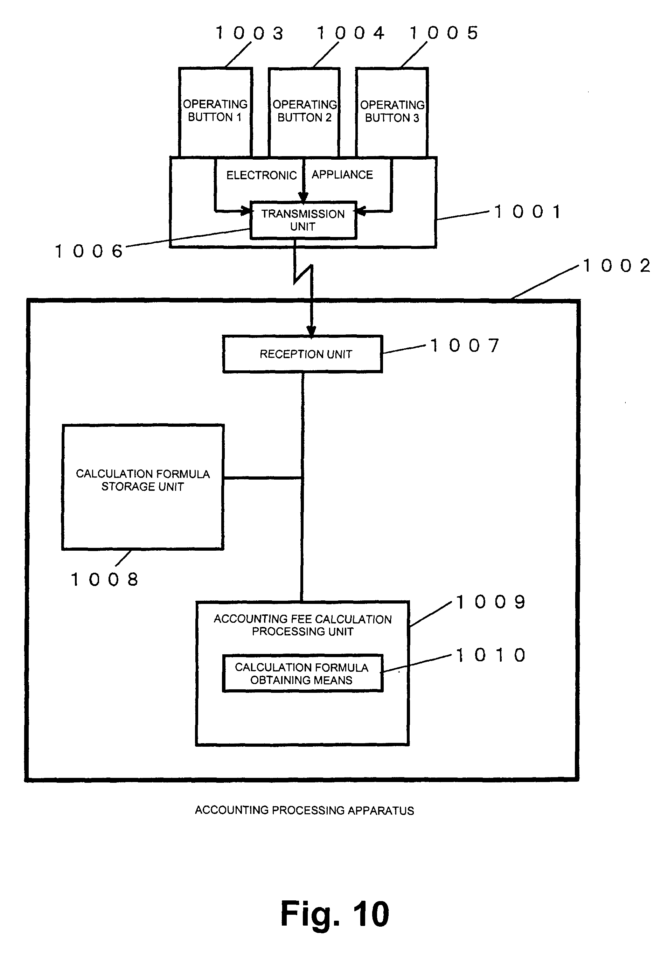

FIG. 10 illustrates a function of an electronic appliance 1001 and an accounting processing apparatus 1002 according to this invention. As shown in FIG. 10, the electronic appliance 1001 has at least one of operating buttons 1003, 1004 and 1005. The information on the usage of the operating button is transmitted from a transmission unit 1006 of the electronic appliance 1001 to a reception unit 1007 of an accounting processing apparatus 1002. The accounting processing apparatus 1002 comprises a reception unit 1007, an accounting fee calculation unit 1009 and a calculation formula storage unit 1008. The reception unit 1007 receives the information on the usage of the electronic appliance 1001 including the information on the usage of the operating buttons 1003, 1004 and 1005 to be directly or indirectly transmitted from the electronic appliance 1001. The accounting fee calculation unit 1009 receives this information and takes out the information necessary to obtain the calculation formula, which is stored in the calculation formula storage unit 1008. The calculation formula storage unit 1008 stores the calculation formula which is suitable for calculating the accounting fee for the use of these operating buttons 1003, 1004 and 1005. Further, calculation formula obtaining means 1010 of the accounting fee calculation processing unit 1009 obtains this calculation, the accounting fee calculation processing unit 1009 calculates the accounting fee by using this calculation formula.

Then, an embodiment for charging for the usage of a disk which is an information accumulation medium of the electronic appliance will be described. FIG. 4 illustrates an accounting processing method according to this invention. This invention provides an accounting processing method for calculating the accounting fee by using this accumulation medium in the case where the electronic appliance has an accumulation medium which can accumulate information. For example, by using this invention, it is possible to differentiate the accounting fee between the case that the music composition which is transmitted to the electronic appliance is listened only once and the case that the music composition which is transmitted to the electronic appliance is listened in plural times by accumulating the data of the transmitted music composition in the accumulation medium of the electronic appliance. A calculation formula that is determined for the use of the accumulation medium is used to calculate this accounting fee.

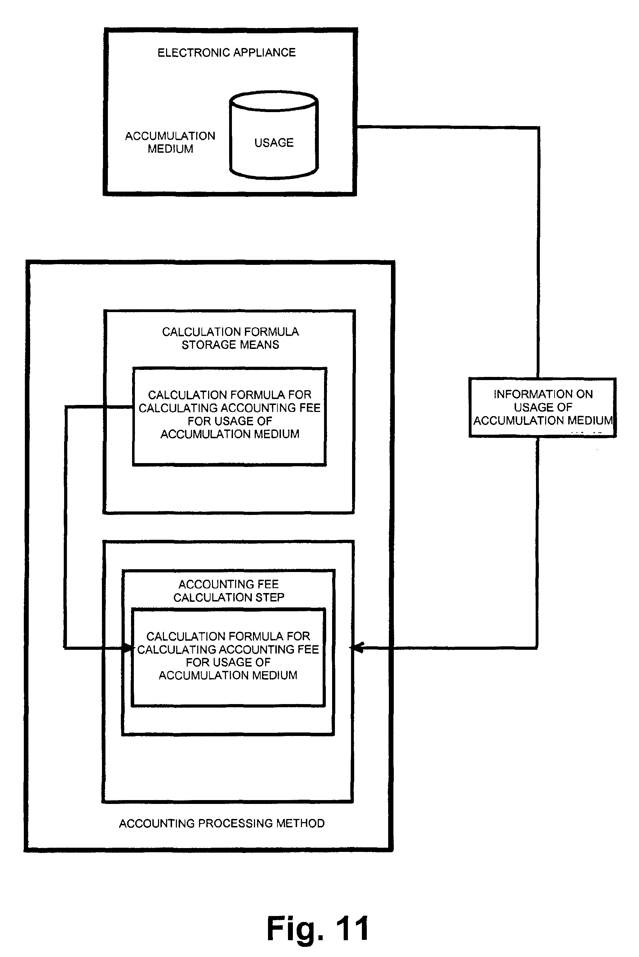

FIG. 11 illustrates an example of an accounting processing method according to this invention. As shown in FIG. 11, an accumulation medium of the use of an object of the accounting processing according to this invention belongs to the electronic appliance. In other words, this electronic appliance is provided with the accumulation medium. However, a recording medium which is inserted in a drive of the electronic appliance to be used for recording, for example, a DVD disk and a CD-R disk and the like are also included in this accumulation medium. The accounting processing method comprises calculation formula storage means and an accounting fee calculation step. This invention is different from other inventions in that the calculation formula stored in the calculation formula storage means calculates the accounting fee for the use of the accumulation medium.

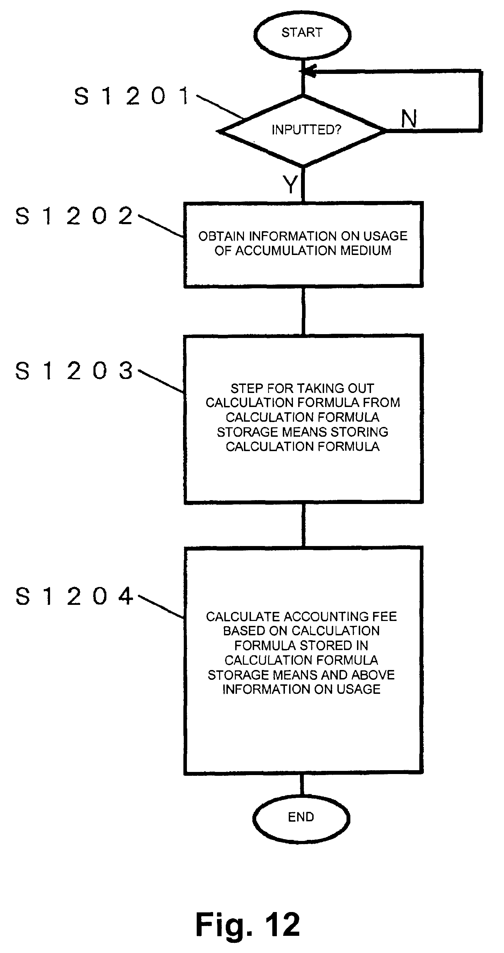

FIG. 12 shows an example of a flow of the processing according to this invention. At first, waiting until the information for calculating the accounting fee is inputted (S1201), if it is inputted, then, the information on the usage of the accumulation medium is obtained (S1202). Then, the calculation formula is taken out from the calculation formula storage means for storing the calculation formula which calculates the accounting fee for the use of the electronic appliance (S1203). Next, on the basis of the calculation formula that is taken out in the above step and the information on the usage of the accumulation medium, the accounting fee is calculated (S1204).

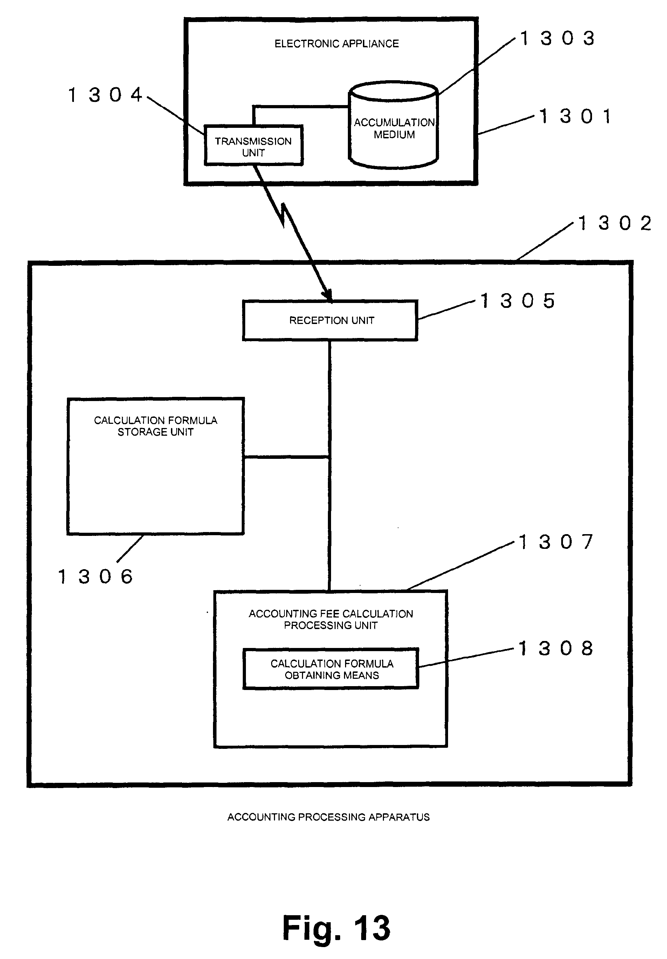

FIG. 13 illustrates an example of a function of an electronic appliance 1301 and an accumulation processing apparatus 1302 according to this invention. As shown in FIG. 13, an electronic appliance 1301 has an accumulation medium 1303 for accumulating information. By accumulating information in this accumulation medium 1303, it becomes possible to reuse, rearrange, integrate and process the information, so that the service is realized. This electronic appliance 1301 has a transmission unit 1304. By this transmission unit 1304, the information on the usage of the accumulation medium 1303 is directly or indirectly transmitted to the accumulation processing apparatus 1302. The accumulation processing apparatus 1302 of this invention has a reception unit 1305 for receiving the information on the usage of the accumulation medium 1303 from the electronic appliance 1301. The information on the usage of the accumulation medium 1303 includes the information on a capacity of the used accumulation medium 1303, a period during the accumulation medium 1303 is used, hours during the accumulation medium 1303 is used, the number that the information on the accumulation medium 1303 is accessed, the number that the information on the accumulation medium 1303 is read, the number that the information on the accumulation medium 1303 is processed, the number that the accumulation medium 1303 is replaced and a reading rate when the accumulation medium 1303 is read and the like. This accumulation processing apparatus 1302 has a calculation formula storage unit 1306 and an accounting fee calculation processing unit 1307. The calculation formula storage unit 1306 stores the calculation formula for calculating the accounting fee for the use of the accumulation medium 1303. Calculation formula obtaining means 1308 of the accounting fee calculation processing unit 1307 obtains the calculation formula from the calculation formula storage unit 1306 by using the information on the usage of the accumulation medium 1303 or the like, which is received by the reception unit 1305, so that the accounting fee calculation processing unit 1307 calculates the accounting fee by using the obtained calculation formula. As a specific example of the calculation formula, for example, the calculation formula such that the accounting fee is 10 yen per day for the use of the accumulation medium 1303 by 10 mega bytes is considered. Further, according to the kinds of the accumulation medium 1303, this calculation formula may be changed. For example, in the case that the accumulation medium 1303 is a hard disk drive, the accounting fee is 1 yen per day for the use of the accumulation medium 1303 by 1 mega byte and in the case that the accumulation medium 1303 is a RAM, the accounting fee is 5 yen per day for the use of the accumulation medium 1303 by 1 mega byte. Therefore, for example, if the accounting fee is 10 yen per day for the use of the accumulation medium 1303 by 1 mega byte, the calculation formula such that the accounting fee (yen) = the used capacity of the accumulation medium (mega byte) × 1 (yen) × the number of days during the accumulation medium is used (day) is considered.

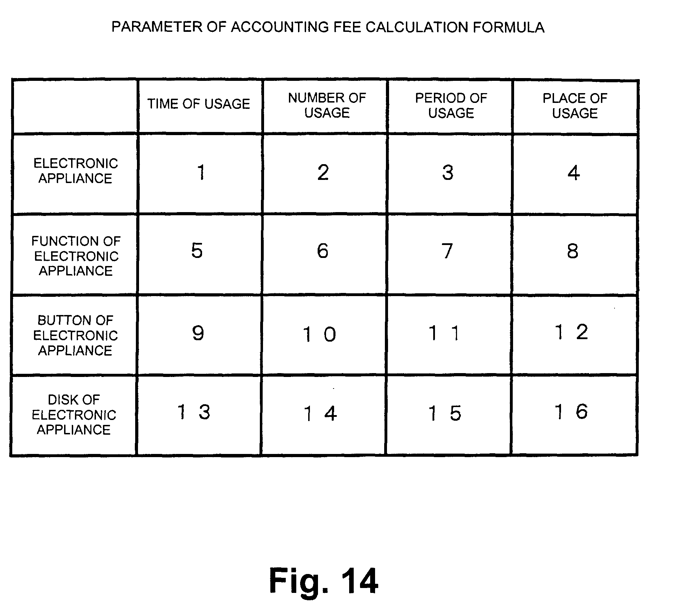

Next, the invention having further characteristic parameters in addition to the parameters that are used upon calculating the accounting fee according to the aforementioned inventions will be explained below. This invention relates to how to quantify the usage of the electronic appliance, the usage of the function, the usage of the operating button and the usage of the accumulation medium in the aforementioned invention and to use them in the calculation formula. In this invention, they are quantified depending on "hours of use", "the number of use", "period of use" and "place for use". Specifically, combinations shown in FIG. 14 are considered. According to these combinations, sixteen combinations are indicated. However, as a parameter to be used in the calculation formula, more than two combinations in these combinations may be also available. The accounting processing receptive for the update and the change of the service can be performed due to these combinations. For example, according to the calculation formula for the usage of a picture telephone of the electronic appliance, the accounting fee is 10 yen per hour of usage, the accounting fee is 5 yen per hour of usage on and after five times of the usage, the entire accounting fee is reduced by 30% in the case that a usage period from start of use to end of use passes over more than one year and the extra charge is paid by 20% of the entire accounting fee in the case that the television telephone of the electronic appliance is used at more than two places. Additionally, if there is the operating button of an auction of a costume used in a movie in the buttons of the electronic appliance, the accounting fee is 5 yen per minute of time of use, the extra charge is paid by 10% of the entire accounting fee if the number of use exceeds ten times, the entire extra charge is reduced by 20% if the usage period passes over one year and the extra charge is paid by 5% of the entire accounting fee if the electronic appliance is used in the open air.

Next, an embodiment according to the invention related to an accounting processing method in the case of charging the accounting fee in compensation for lending of the electronic appliance will be explained below. This invention relates to a case that an agent for providing a service is charged. At first, a method for calculating the accounting fee for the setting of the electronic appliance will be explained. As described above, the electronic appliance according to this invention includes the electronic appliance constituting a part of the multimedia terminal in addition to the multimedia terminal or the like. The electronic appliance constituting a part of the multimedia terminal includes "a screen display device", "a disk as an accumulation medium", "a remote controller button", "VRAM (video ram)" and "a network interface" and the like of the multimedia terminal. Further, the network interface includes a modem such as an Ethernet interface and a V90 modem and the like, an IEEE 1394 interface, a DV (digital video) terminal and a SD card interface or the like. That is because these can provide discriminating service.

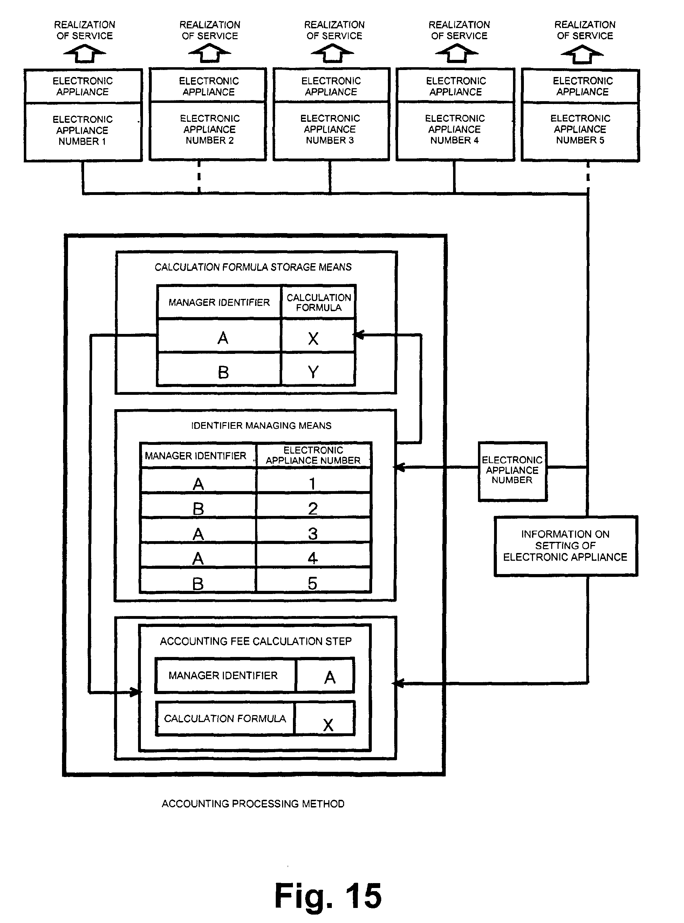

Additionally, as shown in FIG. 15, this accounting processing method according to this invention has identifier managing means, calculation formula storage means and an accounting fee calculation step. The explanation will be given based on this example. The "identifier managing means" is means for managing a manager identifier for identifying a manager of the electronic appliance. Specifically, the "manager" is a service providing agent for providing a service to an end user in response to lending of the electronic appliance. For example, if a content of the service is an advertisement, the "manager" is an advertiser and if a content of the service is distribution of a video image, the "manager" is an agent for lending a video program or the like. According to an example shown in FIG. 15, the manager identifiers are "A" and "B". These manager identifiers are held with making a pair with an electronic appliance number specific to each electronic appliance. The "calculation formula storage means" stores the calculation formula for calculating the accounting fee for the setting of the electronic appliance. According to this example, the calculation formula is stored with making a pair with the manager identifier. In the case that the calculation formulas are the same irrespective of the manager, it is not necessary to store the calculation formula with making a pair with the manager identifier. Next, according to the "accounting fee calculation step", the accounting fee is calculated for the manager who is identified by the manager identifier on the basis of this calculation formula. In this case, there is a case such that the information on the setting of the electronic appliance is used. In this example, the manager of the manager identifier A manages all three electronic appliances, so that the information on the setting of these electronic appliances is used when the calculation formula calculates the accounting fee.

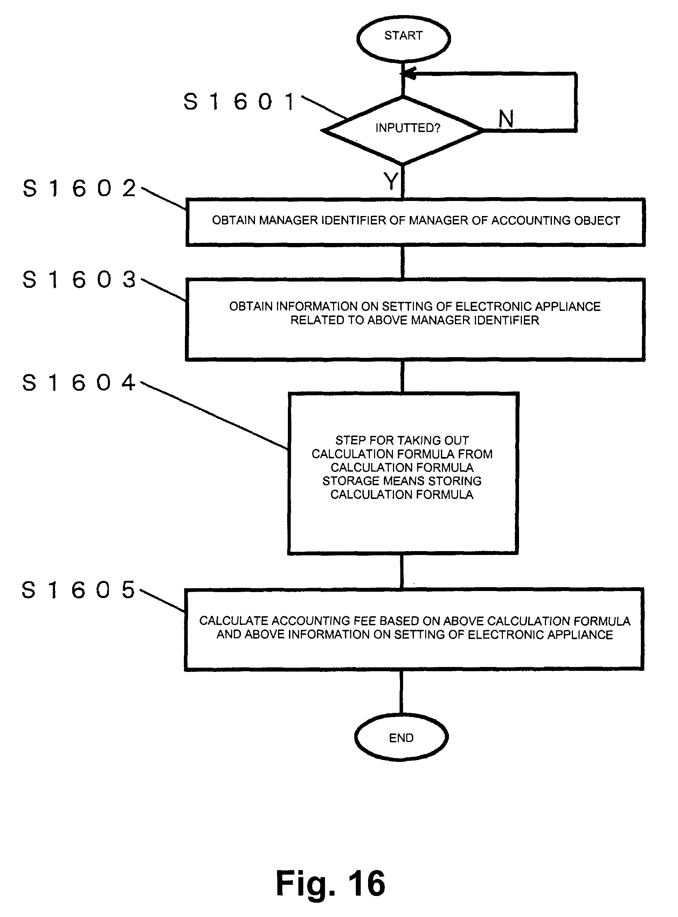

FIG. 16 shows a flow of the processing according to this invention. At first, waiting until the information for calculating the accounting fee is inputted (S1601), if it is inputted, then, the manager identifier of the manager who is an object of the accounting is obtained (S1602). The manager identifier may be obtained by inputting the manager identifier to identify the specific manager upon starting the accounting processing or it may be obtained from a table in which this accounting processing apparatus holds the manager identifier as a table. For example, in the case of regularly performing the accounting processing for a plurality of managers who are objects of the accounting processing, the manager identification numbers held in the table are processed from a smaller number. Next, the information on the setting of the electronic appliance associated with the manager identifier is obtained (S1603). Further, the calculation formula is taken out from the calculation formula storage means for storing the calculation formula which calculates the accounting fee for the use of the electronic appliance (S1604). Then, on the basis of the calculation formula that is taken out in the step and the information on the setting of the electronic appliance, the accounting fee is calculated (S1605).

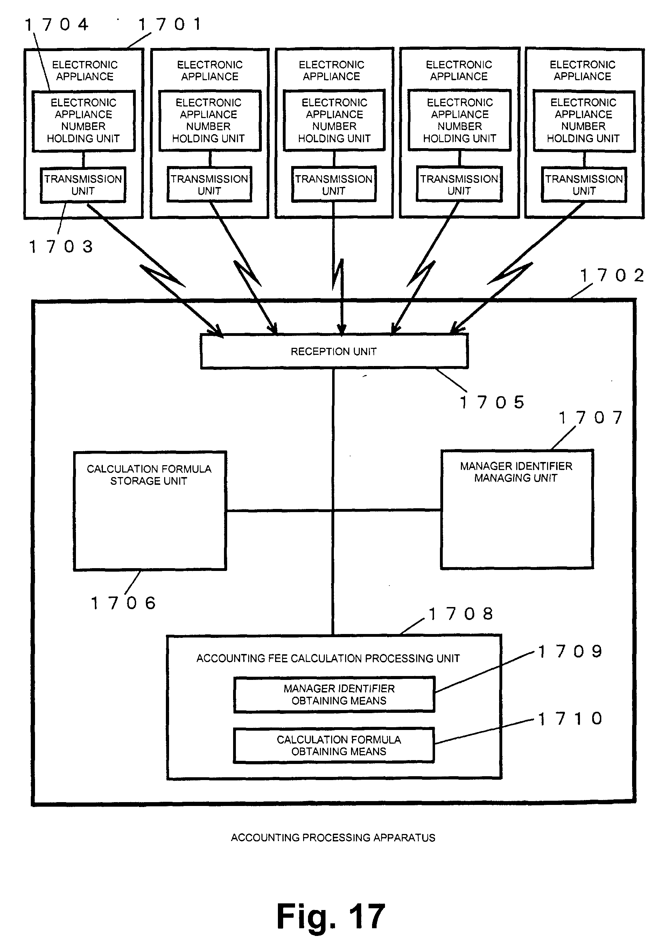

FIG. 17 illustrates an example of a function of an electronic appliance 1701 and an accounting processing apparatus 1702 according to this invention. The electronic appliance 1701 has an electronic appliance number holding unit 1704 and a transmission unit 1703. The "electronic appliance number holding unit" 1704 holds the electronic appliance number as relating it to the information on the electronic appliance 1701. The "transmission unit" 1703 transmits the information on the electronic appliance 1701 to the accounting processing apparatus 1702 as relating it to the electronic appliance number.

The "information on the electronic appliance" means the information on the usage of the electronic appliance 1701 and the setting thereof. The information on the usage of the electronic appliance 1701 includes the information on that the function of the electronic appliance 1701 is activated, what function is activated and what operating button is activated and the like. The "accounting processing apparatus" 1702 comprises a reception unit 1705, a calculation formula storage unit 1706, a manager identifier managing unit 1707 and an accounting fee calculation processing unit 1708. For example, the "reception unit" 1705 receives the information on the setting of the electronic appliance 1701 as the information related to the electronic appliance number. Only one electronic appliance number is determined for each electronic appliance 1701, so that there is no electronic appliance 1701 having the same number. The information on the setting of this electronic appliance 1701 is transmitted to the accounting fee calculation processing unit 1708 with being related to the electronic appliance number to be used for the accounting processing.

The "manager identifier managing unit" 1707 holds the electronic appliance number and the manager identifier with being paired each other. In this case, "being paired" means to associate them each other or to hold them as a table. The manager identifier managing unit 1707 can take out the manager identifier 1707 of the manager of the present appliance from the appliance number which is received by the reception unit 1705 by using this association. This manager identifier is passed over to a calculation formula storage unit 1706 or an accounting fee calculation processing unit 1708 to be used to select the calculation formula necessary for the accounting processing for the present manager This is because the calculation formula of the accounting fee is provided according to each manager. Additionally, in the case of specifying the manager in advance and performing the accounting processing for this manager, the processing is performed in such a manner that the manager identifier is specified at the point that the processing is started, the electronic appliance number being paired to this manager identifier is taken out and the information on the setting of the electronic appliance 1701 is obtained from the electronic appliance 1701 corresponding to this number via the reception unit 1705.

The "calculation formula storage unit" 1706 stores the calculation formula for calculating the accounting fee for the usage and the setting of the electronic appliance 1701. This calculation formula is stored in the calculation formula storage unit 1706 with being paired with the manager identifier since this calculation formula is occasionally different for each manager. The "accounting fee calculation processing unit" 1708 has calculation formula obtaining means 1710 for obtaining the calculation formula to be used for calculating the accounting fee for the manager from the calculation formula, which is stored in the calculation formula storage unit 1706. Further, the accounting fee calculation processing unit 1708 obtains the manager identifier corresponding to manager identifier obtaining means 1709 from the manager identifier managing unit and performs the accounting processing by using other information on the setting of the electronic appliance 1701 which is received by the reception unit 1705, as associating the manager identifier with the calculation formula.

Next, the invention providing an accounting processing method in the case of charging the accounting fee for lending of the functions of the electronic appliance or allotment sale thereof will be explained below. This invention relates to an accounting processing method for calculating the accounting fee in compensation not for an entire electronic appliance but for lending the function belonged to the present electronic appliance and embedding the present function in the electronic appliance by a person owning the electronic appliance. The "embedding" means to mount the function in the electronic appliance. For example, this mounted function can distribute a commercial message of a specific company through the electronic appliance.

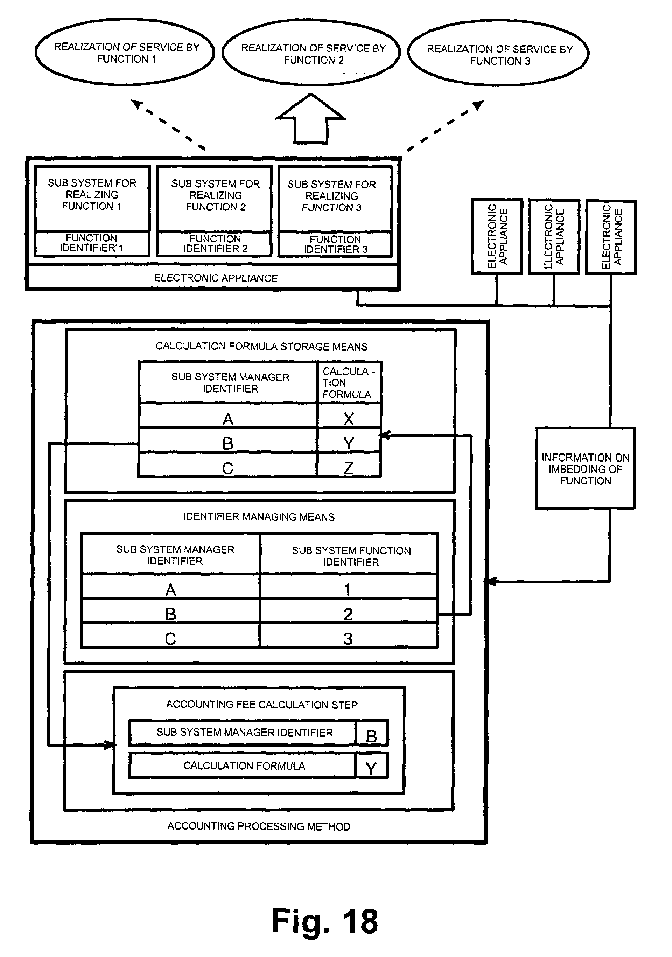

FIG. 18 illustrates an accounting processing method according to this invention. The accounting processing method according to this invention has identifier managing means, calculation formula storage means and an accounting fee calculation step. It is a first characteristic point of this invention that the identifier managing means manages a sub system manager identifier for identifying the manager of the sub system to realize one function of the electronic appliance. That is because the electronic appliance is lent for each sub system, the electronic appliance is sold in lots and the accounting fee is calculated. The "sub system" serves to realize the function of the electronic appliance. A plurality of sub systems are mounted on the electronic appliance so that a plurality of functions can be realized in one electronic appliance. These plural sub systems have a function identifier for each sub system since they are needed to be associated with the sub system manager in the process of the accounting processing. The sub system means a system for designating a specific language other than Japanese and switching Japanese with the designated language by voice in the case that a paid video program is viewed by the electronic appliance.

Additionally, it is a second characteristic point of this invention that the calculation formula stored in the calculation formula storage means is a calculation formula for calculating the accounting fee for the manager who is identified by this sub system manager identifier. That is because in order to calculate the accounting fee for each function of the electronic appliance, it is necessary to use the calculation formula which is prepared for each sub system manager who manages this function. Accordingly, the calculation formula which is stored in the calculation formula storage means, is associated with the sub system manager identifier. Further, the operation of the accounting fee calculation step is basically the same as that of the invention which is explained previously.

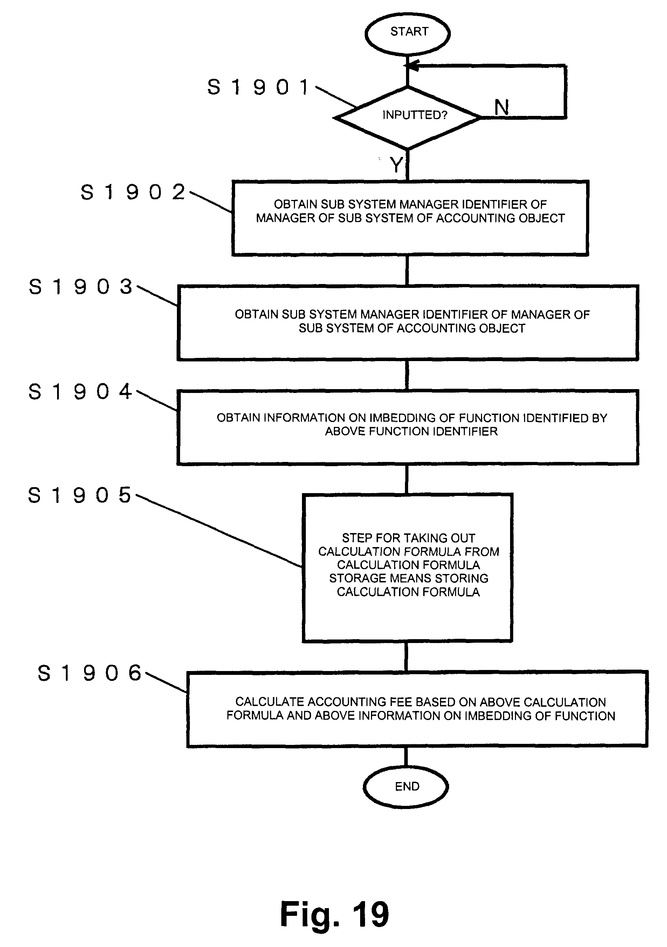

FIG. 19 illustrates a flow of the processing according to this invention. At first, waiting until the information for calculating the accounting fee is inputted (S1901), if it is inputted, then, the sub system manager identifier of the sub system manager who is an object of the accounting is obtained (S1902). Next, the function identifier may be obtained to identify the function which is associated with the sub system manager identifier (S1903) and the information on the embedding of the function which is identified by this function identifier, is obtained (S1904). Further, the calculation formula is taken out from the calculation formula storage means for storing the calculation formula which calculates the accounting fee for the use of the electronic appliance (S1905). Then, on the basis of the calculation formula that is taken out in the above step and the information on the embedding of the function of the electronic appliance, the accounting fee is calculated (S1906).

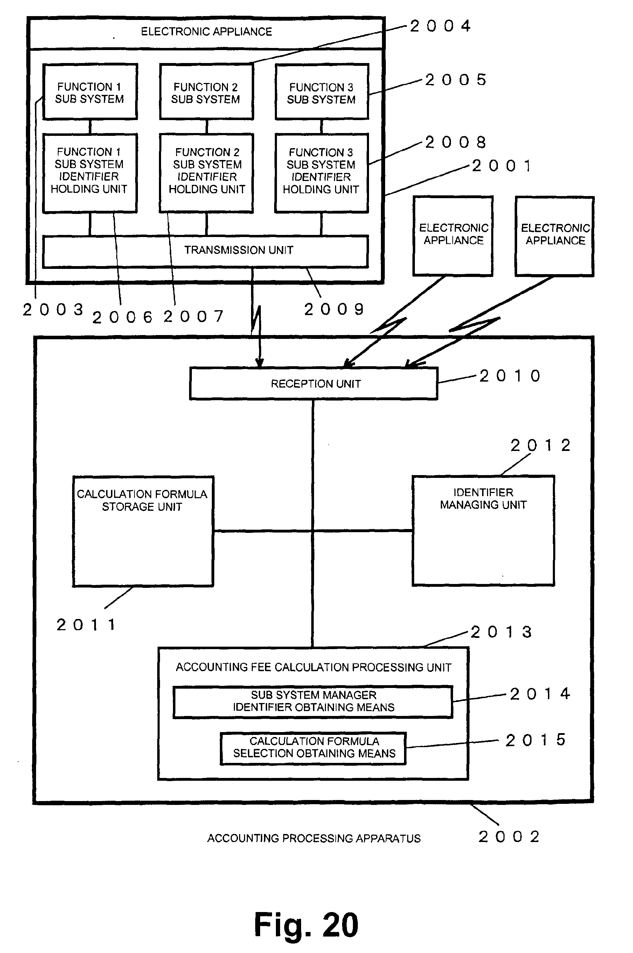

FIG. 20 illustrates a function of an electronic appliance 2001 and an accounting processing apparatus 2002 according to this invention. The electronic appliance 2001 has a sub system for realizing a plurality of functions. According to this example, the electronic appliance 2001 has sub systems 2003, 2004 and 2005 to realize three functions from a function 1 to a function 3. Further, a function identifier of the sub system is defined for each sub system and it is held in sub system identifier holding units 2006, 2007 and 2008. According to this example, the holding unit is provided for each function sub system. However, function identifiers of the three sub systems may be held at one place. This function identifier is simultaneously embedded when the function is embedded in the electronic appliance 2001 or it operates as an identifier capable of being taken out by preparing the function identifier in the electronic appliance 2001 in advance and embedding the function.

The accounting processing apparatus 2002 comprises a reception unit 2010, a calculation formula storage unit 2011, an identifier managing unit 2012 and an accounting fee calculation processing unit 2013. The "reception unit" 2010 receives the information on the embedding of the function including the manager identifier, which is transmitted from the transmission unit 2009 of the electronic appliance 2001, and passes it to the identifier managing unit 2012 or the accounting fee calculation processing unit 2013.

The "identifier managing unit" 2012 takes out the sub system manager identifier being paired with the function identifier which is received from the reception unit 2010 to pass it to the calculation formula storage unit 2011. The "calculation formula storage unit" 2011 stores the sub system manager identifier with being paired with the sub system manager identifier. In the case of performing the accounting processing by specifying the sub system manager identifier in advance, the function identifier is specified from the sub system manager identifiers in the identifier managing unit so as to obtain the information on the embedding of the function from the electronic appliance 2001 having the corresponding function identifier.

In the "accounting fee calculation processing unit" 2013, sub system manager identifier obtaining means 2014 obtains the sub system manager identifier from the identifier managing unit 2012. Then, while specifying the subject of the accounting by using the sub system manager identifier, the accounting processing is performed by using the calculation formula which is obtained from the calculation formula storage unit 2011 by the calculation formula selection obtaining means 2015.

Next, the invention providing an accounting processing method in the case of charging the accounting fee for lending of the button for operating the electronic appliance or allotment sale thereof will be explained below. This invention relates to an accounting processing method for calculating the accounting fee in compensation not for an entire electronic appliance but for lending the right of using the operating button belonged to the present electronic appliance and selling the operating buttons in lots and arranging the operating button in the electronic appliance by a person owning the electronic appliance. The "arranging the operating button" means to allocate a function for exclusive use moving to a home page, in which a commercial message of a specific company is provided, in the operating button of the electronic appliance.

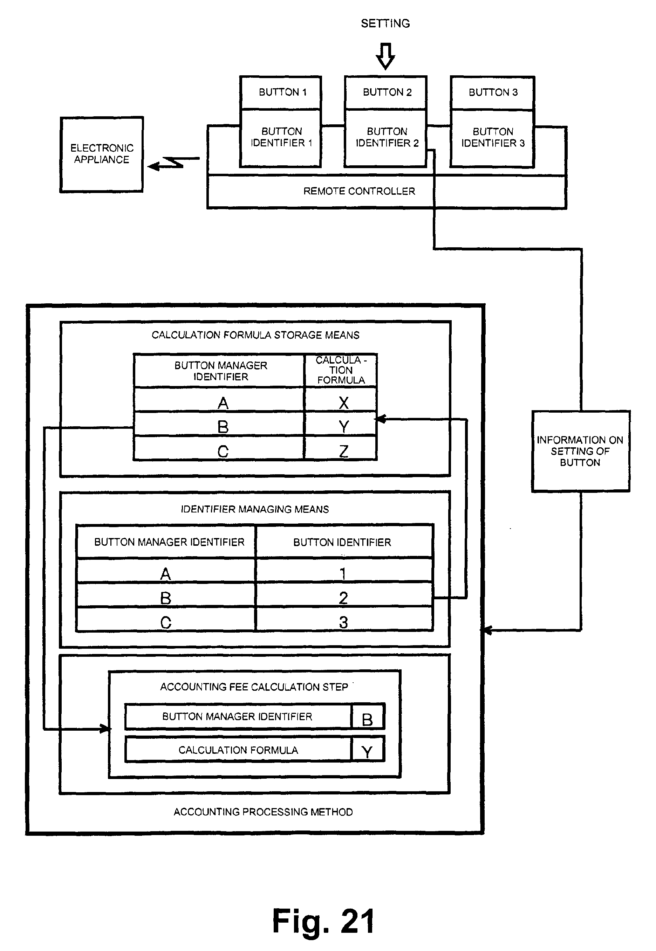

FIG. 21 illustrates an accounting processing method according to this invention. As shown in FIG. 21, the accounting processing method according to this invention comprises calculation formula storage means, identifier managing means and an accounting fee calculation step. The electronic appliance according to this invention is operated by a remote controller having at least one operating button. It is a first characteristic point of this invention that the identifier managing means manages a button manager identifier for identifying the manager of one button of this remote controller. Further, it is a second characteristic point of this invention that the calculation formula stored in the calculation formula storage means is a calculation formula for calculating the accounting fee for the setting of one button for the manager who is identified by the button manager identifier. An example shown in FIG. 21 illustrates how the accounting fee is charged for the setting of the button 2.

The identifier managing means manages the button manager identifier and the button identifier with paring them, so that it is possible to associate the information on the setting of the button associated with the button identifier with the manager of the button identified by the button manager identifier. Further, the calculation formula storage means manages the button manager identifier and calculation formula with paring them, so that it is possible to associate the calculation formulas each other for each manager of the button. Accordingly, it becomes possible to perform the accounting processing by using the corresponding calculation formula for each manager of the button on the basis of the information on the setting of the button.

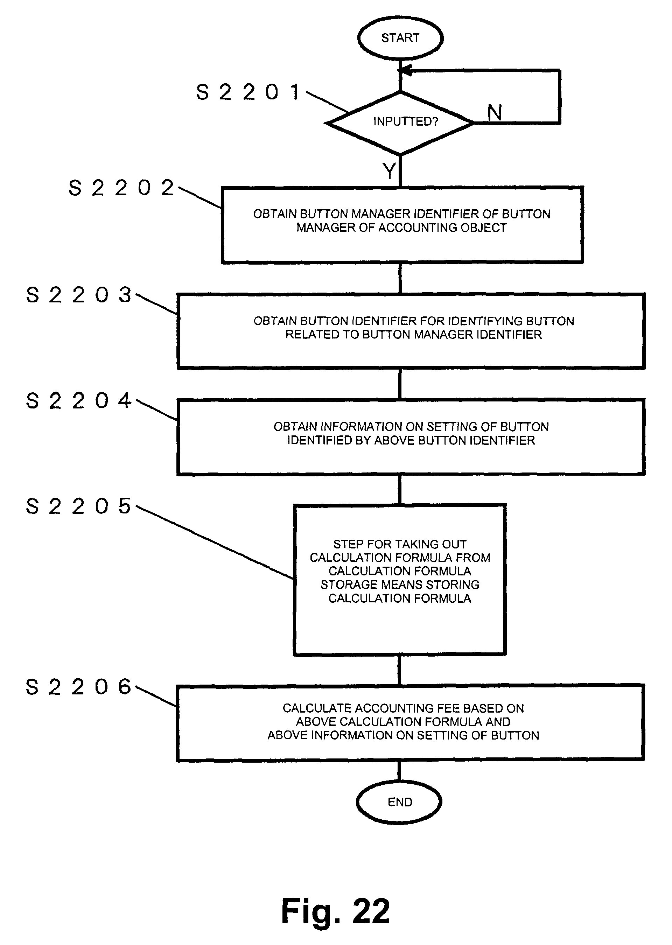

FIG. 22 illustrates a flow of this accounting processing. At first, waiting until the information for calculating the accounting fee is inputted (S2201), if it is inputted, then, the manager identifier of the button manager who is an object of the accounting is obtained (S2202). Next, the button identifier may be obtained to identify the button, which is associated with the button manager identifier (S2203). Consequently, the information on the setting of the button which is identified by this button identifier is obtained (S2204). Further, the calculation formula is taken out from the calculation formula storage means for storing the calculation formula which calculates the accounting fee for the use of the electronic appliance (S2205). Then, on the basis of the calculation formula that is taken out in the above step and the information on the setting of the button, the accounting fee is calculated (S2206).

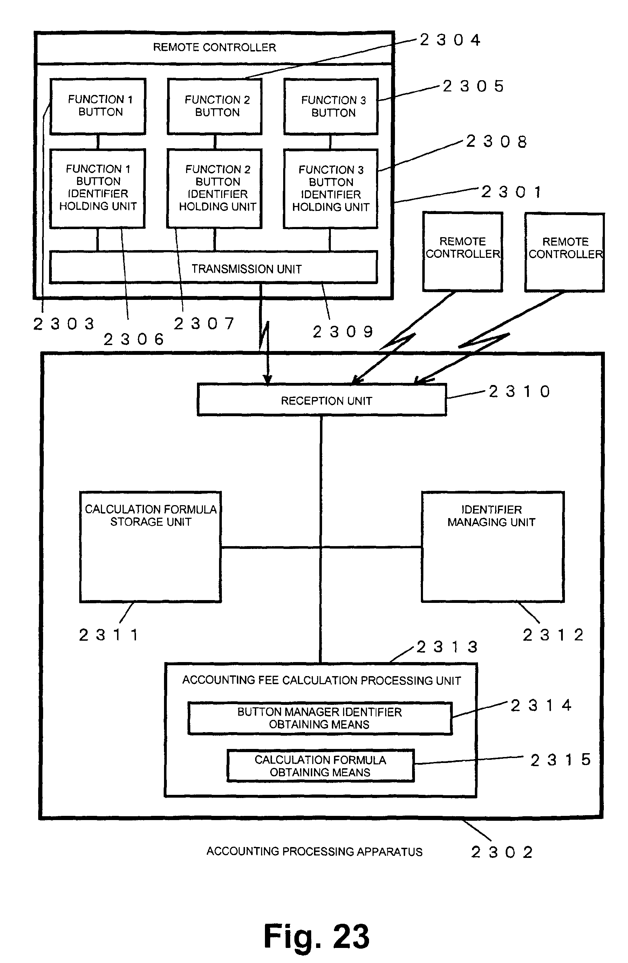

FIG. 23 illustrates a function of a remote controller 2301 and an accounting processing apparatus 2302 according to this invention. The remote controller 2301 holds button identifiers for the function buttons 2303, 2304 and 2305 in button identifier holding units 2306, 2307 and 2308, respectively. The information on the setting of the button associated with the button identifier is directly or indirectly transmitted to the accounting processing apparatus 2302 from the transmission unit 2309. The accounting processing apparatus 2302 comprises a reception unit 2310, an identifier managing unit 2312, a calculation formula storage unit 2311 and an accounting fee calculation processing unit 2313. The reception unit 2310 receives the information on the setting of the button which is transmitted from the remote controller 2301. The identifier managing unit 2312 manages the button manager identifier and the button identifier as paring them. The calculation formula storage unit 2311 manages the button manager identifier and the calculation formula as paring them, so that the calculation formula can be obtained by specifying the button manager identifier. By using this calculation formula, the accounting processing is performed in the accounting fee calculation processing unit 2313. The accounting fee calculation processing unit 2313 has button manager identifier obtaining means 2314 and calculation formula selection obtaining means 2315. Then, the accounting fee calculation processing unit 2313 associates them with the button manager identifier which is obtained by the button manager identifier obtaining means 2314 so as to perform the accounting processing on the basis of the calculation formula which is obtained from the calculation formula storage unit 2311 by the calculation formula selection obtaining means 2315.

Additionally, upon calculating the accounting fee for lending of the electronic appliance, lending of the function of the electronic appliance and lending of the button, it is possible to perform the accounting processing by using the calculation formula with defining at least one of a time of use, the number of use, a period during it is arranged and a place of use as a parameter. These items are included in the information on the usage of the electronic appliance, the information on the embedding of the function of the electronic appliance and the information on the setting of the button of the electronic appliance. The accounting processing receptive for the update and the change of the service can be performed by these items.

Further, it is also possible to use a computer readable recording medium in which a program for executing the aforementioned accounting processing method is described. In this case, a computer means an accounting processing apparatus.

Next, an accounting processing system for performing the accounting processing for the service to be realized by the electronic appliance will be explained.

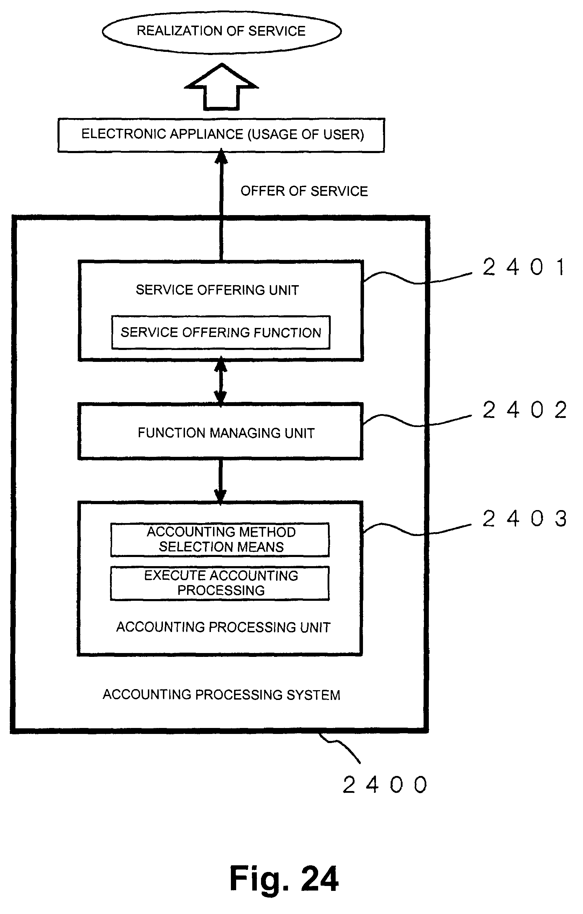

FIG. 24 illustrates an example of a function block of this accounting processing system. As shown in FIG. 24, an accounting processing system 2400 is an accounting processing system for performing the accounting processing for the service to be realized by the electronic appliance. Further, the accounting processing system 2400 has a service offering unit 2401, a function managing unit 2402 and an accounting processing unit 2403. The service offering unit 2401 offers various services to a user. In this case, various services include a service capable of being electronically offered. For example, various services include a service for distributing a video, a service of a live broadcast of a baseball game and a service of distributing an on-line game and the like. The function managing unit 2402 manages a service offering function belonged to the service offering unit 2401. Managing of the service offering function includes that the service to be offered by the service offering unit 2401 is selected and the service offering unit 2401 enables the service to be offered. The accounting processing unit 2403 selects an appropriate accounting method according to the respective service offering functions which are managed by the function managing unit 2402, and performs the accounting processing. It means that this appropriate accounting method is selected by the function managing unit 2402 according to the service offered by the service offering unit 2401. The appropriate accounting method includes the selection of the accounting fee and the accounting means. Additionally, performing the accounting processing means performing a part of or all the accounting processing. Since a part of the accounting processing may be performed, for example, performing the accounting processing includes outputting the accounting amount and its accounting means and the like. In the case that they are simply outputted, a final accounting processing is performed through the external appliance. It is needles to say that a final accounting processing may be performed in the case that the object to be charged is specified.

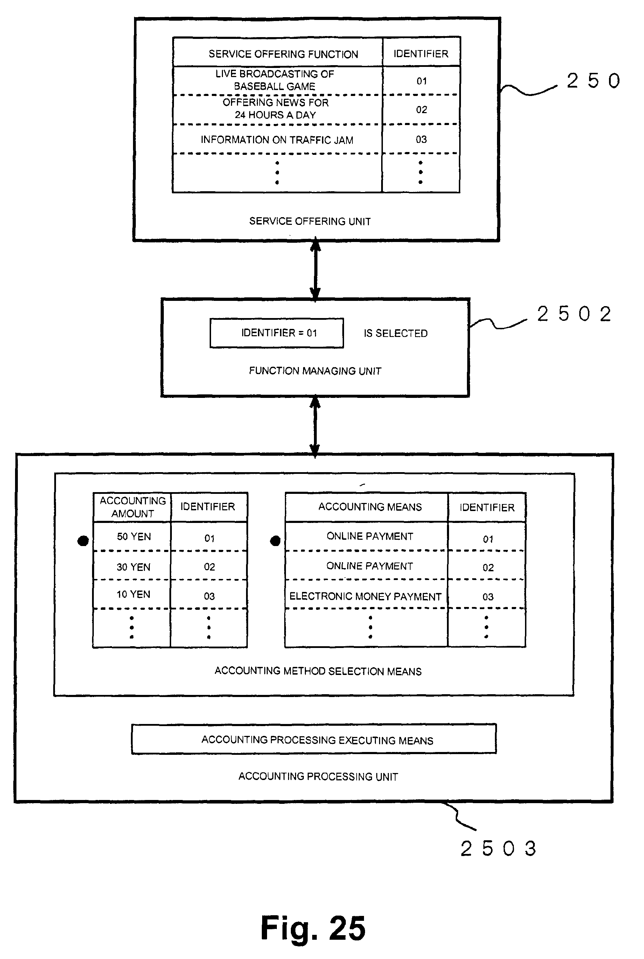

FIG. 25 shows a flow of the processing in a service offering unit 2501, a function managing unit 2502 and an accounting processing unit 2503 according to this embodiment. As shown in FIG. 25, the service capable of being offered in the service offering unit 2501 is held with being associated with the identifier. For example, the identifier "01" is associated with "a live broadcast of a baseball game", "02" is associated with "news for 24 hours a day" and "03" is associated with "information for traffic jam". If the function managing unit selects the identifier "01", the service of "a live broadcast of a baseball game" is offered to the user through the electronic appliance. On the other hand, the information indicating that the service to be identified by this identifier "01" is offered is passed to the accounting processing unit 2503. The accounting processing unit 2503 holds the accounting amount and the accounting means with being associated with the identifier. This is referred to as accounting method selection means. Since the service to be identified by the identifier "01" is offered, "50 yen" as the accounting amount is selected and "on-line money payment" is selected as the accounting means. In accordance with this content, for example, the accounting processing executing means for performing the accounting fee performs the accounting processing.

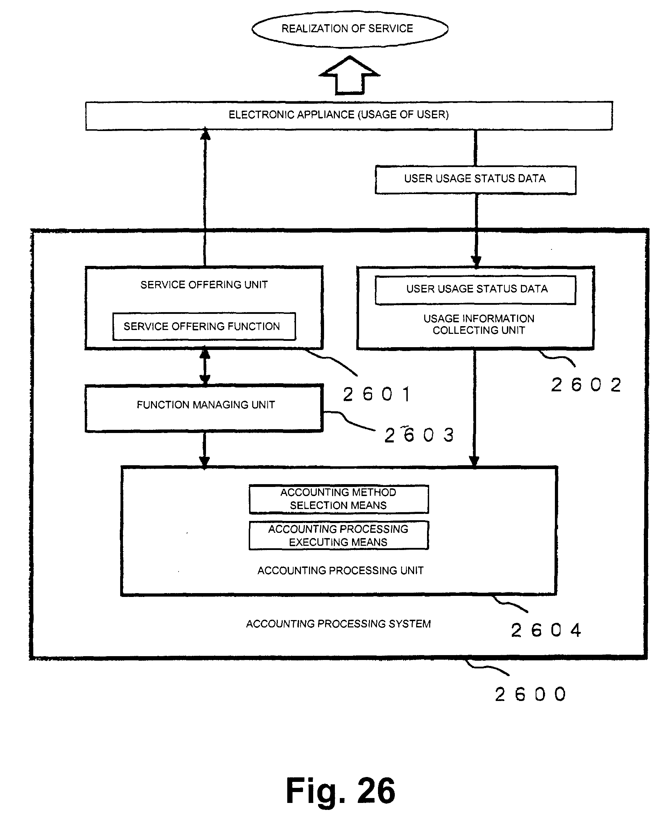

Next, a case that the accounting processing system collects the user usage status data which is information on the usage status of the electronic appliance by the user will be explained below. FIG. 26 illustrates an example of a function block according to this embodiment. As shown in FIG. 26, this accounting processing system 2600 has a usage information collecting unit 2602 in addition to a service offering function 2601, a function managing unit 2603 and a accounting processing unit 2604. The usage information collecting unit 2602 collects the user usage status data which is information on the usage status of the user from the electronic appliance. In this case, the "user usage status data" means the information on the usage of the electronic appliance by the user. For example, it includes the information on the content, the time and the quality such as the information on the usage status of the electronic appliance itself, the information on the usage status of the content through the electronic appliance and the information on the distribution of the program through the electronic appliance and the like. This user usage status data is used for the accounting processing by the accounting processing unit 2604. In other words, the accounting processing system has the usage information collecting unit 2602 for collecting this usage status data. Further, the accounting processing system selects the accounting method according to the user usage status data which is collected by the usage information collecting unit 2602.

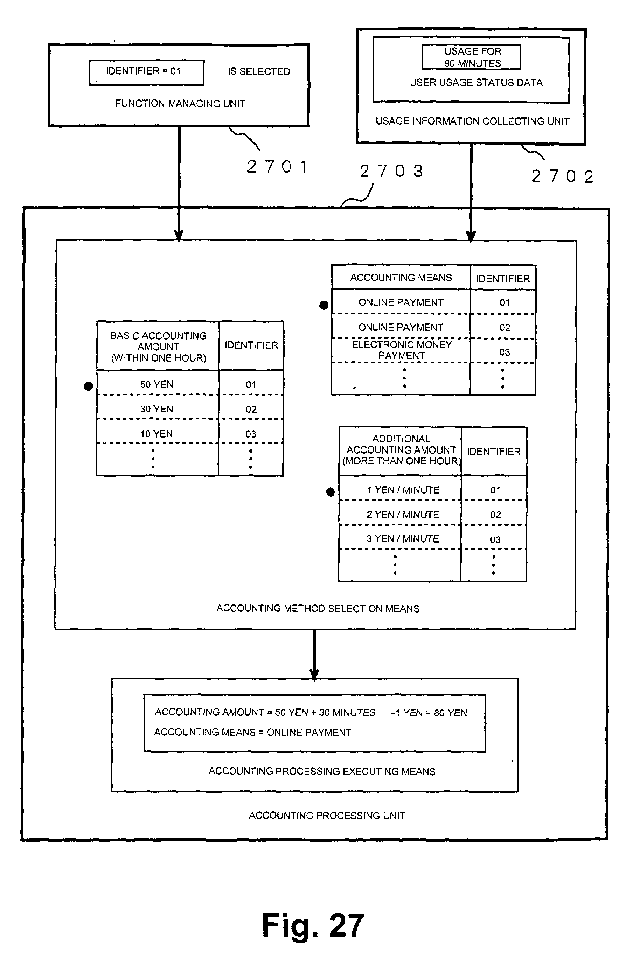

FIG. 27 shows a flow of the processing in a function managing unit 2701, a usage information collecting unit 2702 and accounting method selection means 2703 according to this embodiment. For example, it is assumed that "01" is passed to the accounting method selection means 2703 from the function managing unit 2701 as the identifier of the service function. Additionally, it is assumed that the information indicating that the service of this identifier "01" has been used for 90 minutes is passed to the accounting method selection means 2703 from the usage information collecting unit 2702 as the user usage status data. Therefore, for example, in the accounting method selection means in the accounting method selection means 2703, a basic accounting amount within one hour is defined as "50 yen" with respect to the identifier "01". In the same way, the accounting means is held as "on-line money payment" with respect to the identifier "01". Further, the information indicating that "1 yen per minute" is added as an additional accounting fee for offering the service more than one hour is held with respect to the identifier "01". On the basis of these, the accounting method is selected. The accounting method includes the information necessary for processing the accounting such as the accounting amount or the like in addition to the accounting means. Upon determining this additional accounting amount, the user usage status data of "used for 90 minutes", which is collected by the usage information collecting unit 2702 is used. In other words, the additional accounting fee is charged for 30 minutes, i.e., overused time more than one hour as a time affordable by the basic amount of "50 yen", so that the additional amount is calculated as 30 minutes × 1 yen = 30 yen. On the basis of the processing of the accounting method selection means as described above, the accounting processing executing means executes the on-line money payment by determining that the accounting amount is 80 yen.

Next, a case that the user function usage status data which is information on the usage status of the user for each function of the electronic appliance is collected will be explained.

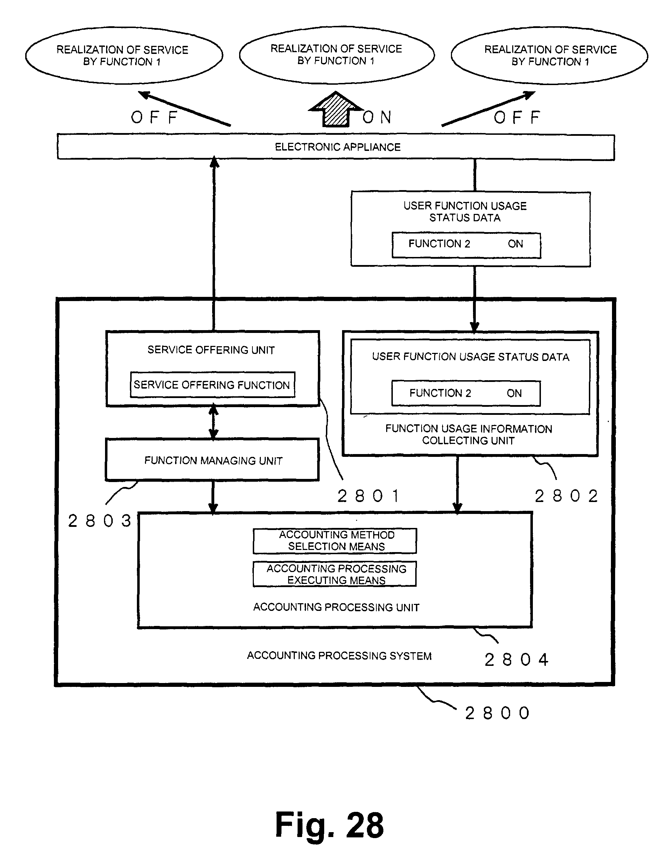

FIG. 28 illustrates an example of a functional block of an accounting processing system according to this embodiment. As shown in FIG. 28, this accounting processing system 2800 has a function usage information collecting unit 2802 in addition to a service offering function 2801, a function managing unit 2803 and an accounting processing unit 2804. The function usage information collecting unit 2802 collects the user function usage status data which is information on the usage status of the user for each function of the electronic appliance. Therefore, the usage status data of the user is the functional data belonged to the electronic appliance. These functions of the electronic appliance serve to realize the services, respectively. For example, they include a function enabling the voice in the foreign language to be listened, a function for slowly reproducing a moving image and a function for recording the broadcast and the like. Further, according to the user function usage status data which is collected by the function usage information collecting unit 2802, the accounting method is selected. For example, the functions to be realized by the electronic appliance are offered by a specific service provider, respectively, so that it is necessary for the user to pay the fee to the service provider who provides the function when the user uses each function. Therefore, by using the user function usage status data according to this embodiment, the accounting fee for every usage of the function can be charged.

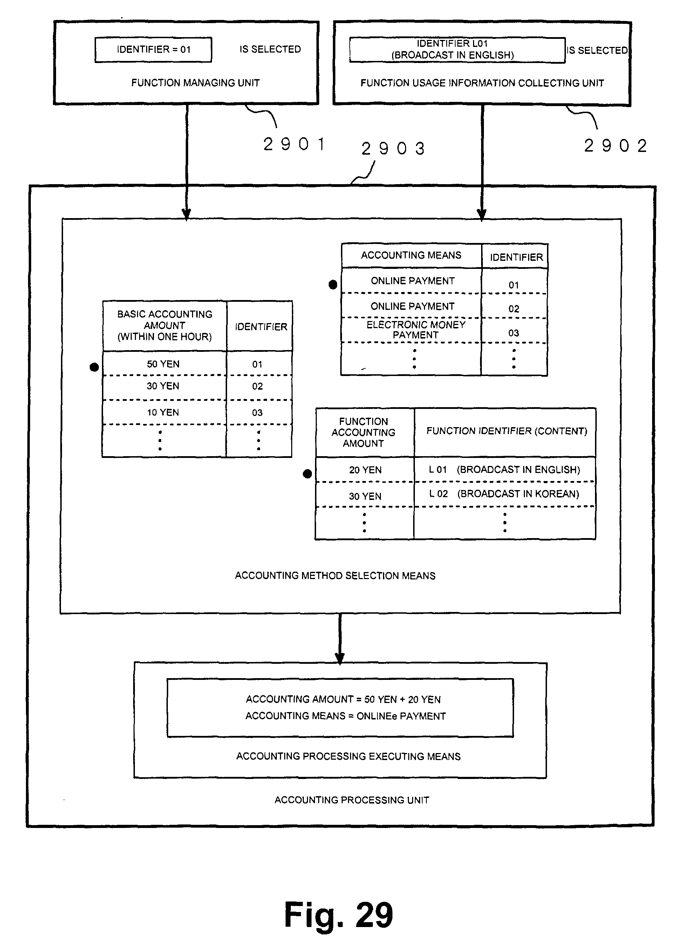

FIG. 29 shows a flow of the processing of a function managing unit 2901, a function usage information collecting unit 2902 and accounting processing unit 2903 according to an accounting processing system of this embodiment. As shown in FIG. 29, for example, it is assumed that the identifier "01" of the service which is offered to the user through the electronic appliance is passed to the accounting processing unit of the accounting processing unit 2903. On one hand, it is assumed that the function usage information collecting unit 2902 collects the information indicating that the function of "broadcast in English" corresponding to the identifier "L01" is used upon receiving the service, which is identified by the used function identifier of "01" and this information is passed to the accounting processing unit 2903. Therefore, in the accounting processing unit 2903, the basic accounting fee amount is selected as "50 yen" and the accounting means is selected as "on-line money payment" with respect to the service identified by this "01". On the other hand, the function accounting fee amount is selected as "20 yen" on the basis of the function identifier as "L01" which is collected by the function usage information collecting unit 2902. According to the selection of these accounting methods, the accounting processing executing means executes all or a part of the processing with the accounting amount of "50 yen + 20 yen" and the accounting means of "on-line money payment".

Next, an accounting processing system to be used for the accounting processing by receiving the information on the setting status of the electronic appliance will be explained below. An object of this system is to provide a service and to enable the accounting processing according to the setting of the electronic appliance to be realized. For example, a manufacturer of the electronic appliance lends the electronic appliance to the user. Then, another service provider provides a service for the user of the lent electronic appliance. The user of the electronic appliance pays to the fee in compensation for this service and the service provider pay the manufacturer of the electronic appliance since the manufacturer offers the opportunity that the service provider can offer the service through the electronic appliance. According to this example, the service provider means a manager of the service to be offered through the electronic appliance. Further, the manufacturer of the electronic appliance is needed to have the accounting fee calculation means for this manager. The accounting processing system according to this embodiment is the optimum means as this accounting fee calculation means. Specifically, the accounting processing unit in the accounting processing system is most appropriate.

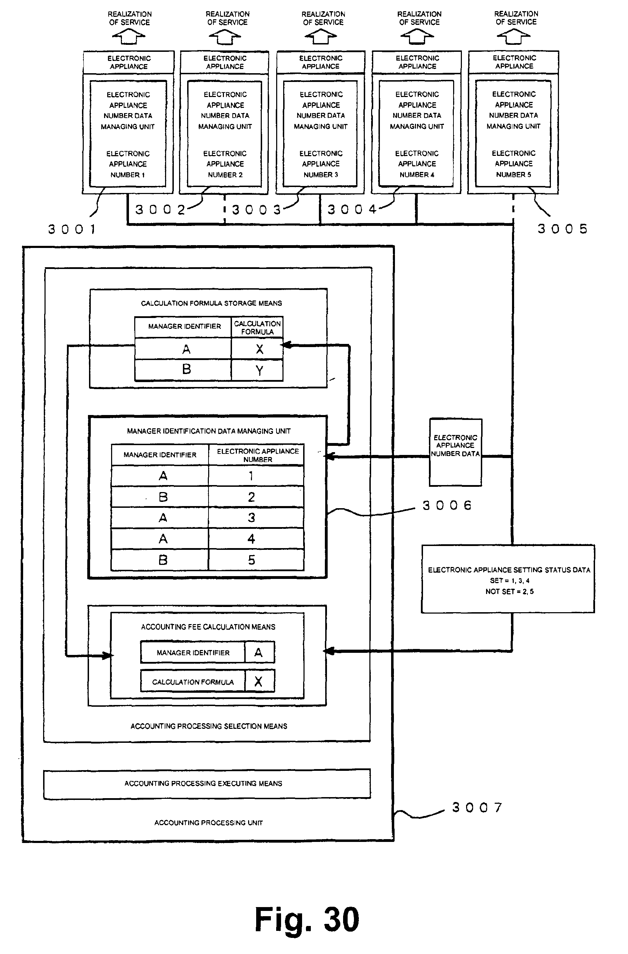

FIG. 30 illustrates an example of a functional block of an accounting processing system according to this embodiment for specifically explaining an accounting processing unit. As shown in FIG. 30, the electronic appliance that is managed by this accounting processing system has electronic appliance number managing units 3001, 3002, 3003, 30004 and 3005 and holds the number of the electronic appliance. This number of the electronic appliance can uniquely identify the electronic appliance in all electronic appliances belonged to this accounting processing system. Further, the electronic appliance passes the electronic appliance setting status data as the information on the setting status of the electronic appliance itself to the accounting processing system with associating this data with this electronic appliance number. This setting status data includes the information indicating that the electronic appliance which is specified by at least corresponding electronic appliance number is available by the user. An accounting processing unit 3007 has a manager identification data managing unit 3006 for managing the manager identification data to identify the manager of the electronic appliance. That is because the object of the accounting is understood in a relation with the electronic appliance. For example, the accounting processing unit 3007 associates the manager identifier as the manager identification data with the electronic appliance number and owns them as a table.

The electronic appliance number data and the electronic appliance setting status data as the information on the setting status of the electronic appliance are received from the electronic appliance. Then, by using the table in which the electronic appliance number data is associated with the manager identification data, the accounting method according to the manager identification data is selected and by using the electronic appliance setting status, the accounting processing according to the respective electronic appliances is performed.

Next, an accounting processing system to be used for the accounting processing by receiving the information on the embedding of the function of the electronic appliance will be explained below.

Although the accounting processing system according to the aforementioned embodiment performs the accounting processing on the basis of the information on the setting of the electric appliance, the accounting processing system according to this embodiment performs the accounting processing on the basis of the information on the embedding of the function of the electric appliance. Accordingly, the object of this embodiment is an "embedding of the function of the electric appliance" instead of the "setting of the electric appliance".

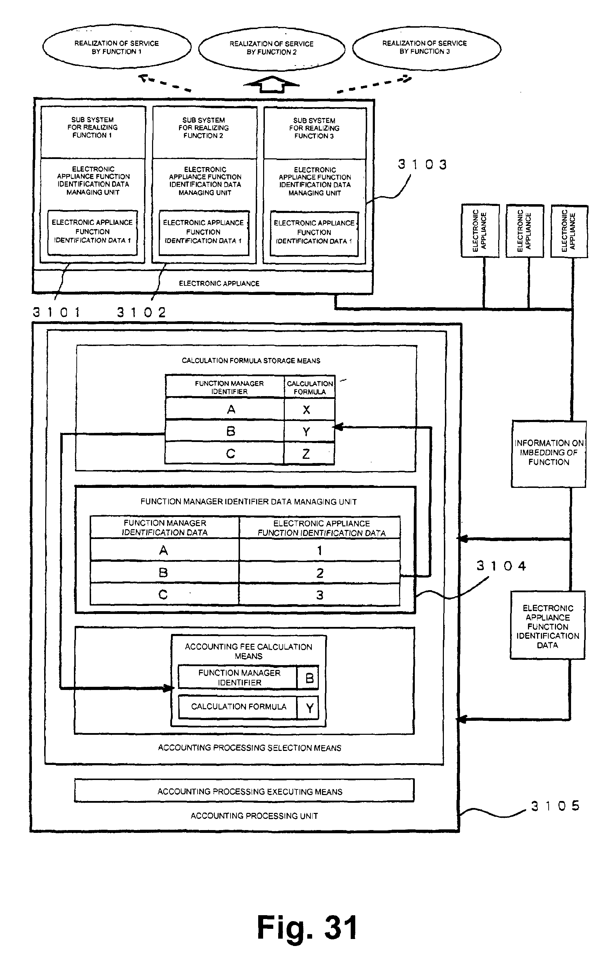

FIG. 31 illustrates an example of a functional block of an accounting processing system according to this embodiment for specifically explaining an accounting processing unit. As shown in FIG. 31, the electric appliance has a sub system for realizing a function and it has electronic appliance function identification data managing units 3101, 3102 and 3103 for each sub system. Then, the electric appliance holds the electronic appliance function identification data for identifying respective sub systems.

The electronic appliance transmits the information on the embedding of the function to the accounting processing system with being associated with the electronic appliance function identification data. This information on the embedding of the function includes the information indicating that the function identified by at least corresponding electronic appliance function identification data is available by the user.

Further, an accounting processing unit 3105 is provided with a function manager identifier data managing unit 3104 for managing the function manager identification data to identify the manager of each function of the electronic appliance. The electronic appliance receives the electronic appliance function identification data and the function embedding data which is information on the embedding of the function, associates the electronic appliance function identification data with the function manager identification data, selects the accounting method according to the function manager identification data and performs the accounting processing by using the electronic appliance function identification data.

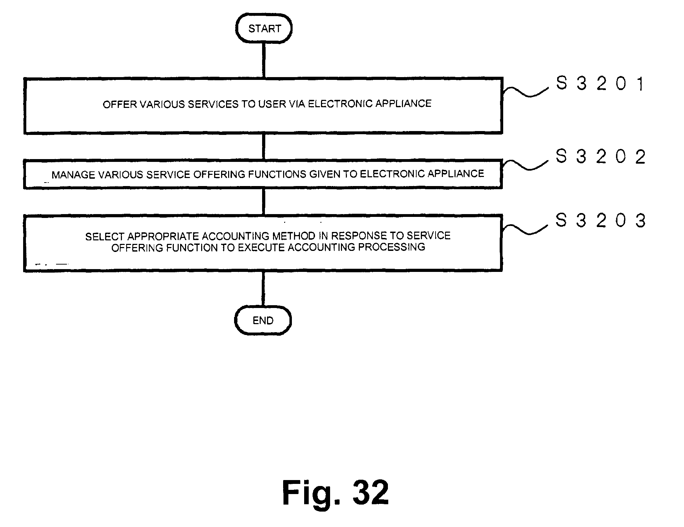

As shown in FIG. 32, the accounting processing method for performing the accounting processing for the service to be realized by the electronic appliance comprises the steps of: offering various services to the user (step S3201); managing various service offering functions belonged to the electronic appliance (step S3202); and selecting an appropriate accounting method according to the service offering function and performing the accounting process (step S3203), so that it is possible to appropriately perform the accounting processing to the service to be realized by the electronic appliance.

Further, an embodiment having a recording medium in which an accounting processing program for performing an accounting processing for a service to be realized by an electronic appliance is recorded, comprising the steps of offering various services to the user; managing various service offering functions belonged to the electronic appliance; and selecting an appropriate accounting method according to the service offering function and performing an accounting process can effectively perform the accounting processing for the service to be realized by the electronic appliance.

Furthermore, there is provided an accounting processing program for performing an accounting processing for a service to be realized by an electronic appliance, the program causing a computer to execute the steps of: offering various services to the user; managing various service offering functions belonged to the electronic appliance; and selecting an appropriate accounting method according to the service offering function and performing an accounting process, which is also available for effectively performing the accounting processing.

According to the conventional accounting processing method, each service provider charges the accounting fee for each service. However, according to the present invention, even in the case of an interactive multimedia service terminal or the like for customizing a plurality of services for each service terminal, it is possible to easily perform many kinds of accounting processings with respect to one service terminal.

Additionally, in the case that a plurality of subjects such as a content provider, a communication agent and a device provider and the like cooperate to offer one service, it becomes possible to easily distribute the service fee income in compensation for the service for each service providing subject.

Further, it becomes possible for an advertiser to easily arrange a reproduction apparatus for a commercial message only, an exclusive function and a button in a home.

Further, such an electronic appliance is lent free of charge as a service portal, so that the user who receives the service can enjoy the desirable service at a low cost. On the other hand, a person who lends the electronic appliance can develop his or her business by receiving the fee from the user who offers the service.

### DESCRIPTION OF REFERENCE NUMERALS

- 301:: electronic appliance
- 302:: accounting processing apparatus
- 303:: transmission unit
- 304:: reception unit
- 305:: calculation formula storage unit
- 306:: accounting fee calculation processing unit
- 307:: calculation formula obtaining means

## Claims

1. An accounting processing method for a service to be realized by an electronic appliance comprising the steps of:
taking out a calculation formula from calculation formula storage means for storing a calculation formula which calculates an accounting fee for the use of said electronic appliance; and
calculating an accounting fee on the basis of said calculation formula which was taken out in said previous method step.

2. An accounting processing method according to claim 1, wherein said electronic appliance realizes a plurality of functions; and
said calculation formula stored in said calculation formula storage means calculates an accounting fee for the use of one function to be realized by said electronic appliance.

3. An accounting processing method according to claim 1 or 2,
wherein said electronic appliance is operated by a remote controller having at least one operating button; and
said calculation formula stored in said calculation formula storage means calculates an accounting fee for the use of said operating button.

4. An accounting processing method according to claim 1, 2 or 3,
wherein said electronic appliance is provided with an accumulation medium for accumulating the information; and
said calculation formula stored in said calculation formula storage means calculates an accounting fee for the use of said accumulation medium.

5. An accounting processing method according to any one of claims 1 to 4, wherein at least one of hours of use, the number of use, period of use and place for use of said electronic appliance or said function or said button or said dusk is used as a parameter in said calculation formula.

6. An accounting processing method for a service to be realized by an electronic appliance comprising:
identifier managing means for managing a manager identifier for identifying a manager of said electronic appliance;
calculation formula storage means for storing a calculation formula for calculating an accounting fee for said electronic appliance; and
an accounting fee calculation step for calculating an accounting fee for a manager who is identified by said manager identifier on the basis of said calculation formula which is stored in said calculation formula storage means.

7. An accounting processing method according to claim 6, wherein said electronic appliance is a screen display apparatus; and
said calculation formula calculates an accounting fee for the exclusive use of a portion of or all display screen in which said screen display apparatus is used.

8. An accounting processing method according to claim 6 or 7,
wherein said electronic appliance realizes a plurality of functions;
said identifier managing means manages a sub system manager identifier for identifying a manager of a sub system who realizes one function of said electronic appliance; and
a calculation formula which is stored in said calculation formula storage means calculates an accounting fee for embedding of said one function for a manager who is identified by said sub system manager identifier.

9. An accounting processing method according to claim 6, 7 or 8,
wherein said electronic appliance is operated by a remote controller having at least one operating button;
said identifier managing means manages a button manager identifier for identifying a manager of one button of said remote controller; and
a calculation formula which is stored in said calculation formula storage means calculates an accounting fee for the setting of said one button for a manager who is identified by said button manager identifier.

10. An accounting processing method according to any one of claims 6 to 9, wherein at least one of hours of use, the number of use, period of use and place for use of said electronic appliance or said function or said button is used as a parameter in said calculation formula.

11. An accounting processing method according to claim 1 or 6,
wherein said electronic appliance is a video RAM or/and a network interface.

12. An accounting processing system for performing an accounting processing for a service to be realized by an electronic appliance comprising:
a service offering unit for offering various services to a user;
a function managing unit for managing a service offering function belonged to said service offering unit; and
an accounting processing unit for selecting an appropriate accounting method according to the respective service offering functions which are managed by said function managing unit, and performing an accounting processing.

13. An accounting processing system for performing an accounting processing for a service to be realized by an electronic appliance according to claim 12, comprising:
a usage information collecting unit for collecting user usage status data which is information on the usage status of a user from said electronic appliance;
wherein said accounting processing system further selects an accounting method according to said user usage status data which is collected by said usage information collecting unit.

14. An accounting processing system for performing an accounting processing for a service to be realized by an electronic appliance according to claim 12 or 13, comprising:
a function usage information collecting unit for collecting user function usage status data which is information on the usage status of the user with respect to the respective functions of said electronic appliance;
wherein said accounting processing system further selects an accounting method according to said user function usage status data which is collected by said function usage information collecting unit.

15. An accounting processing system for performing an accounting processing for a service to be realized by an electronic appliance according to claim 12, 13 or 14,
wherein said electronic appliance is provided with an electronic appliance number data managing unit for managing electronic appliance number data for identifying the respective electronic appliances;
further, said accounting processing unit is provided with a manager identification data managing unit for managing manager identification data to identify a manager of said electronic appliance; and
said accounting processing system performs an accounting processing by using electronic appliance setting status data according to respective electronic appliance in such a manner that said accounting processing system receives said electronic appliance number data and said electronic appliance setting status data which is information on the setting status of the electronic appliance, said accounting processing system associates said electronic appliance number data with said manager identification data and said accounting processing system selects an accounting processing method according to said manager identification data.

16. An accounting processing system for performing an accounting processing for a service to be realized by an electronic appliance according to claim 12,
wherein said electronic appliance is provided with an electronic appliance function identification data managing unit for managing electronic appliance function identification data for identifying the respective functions of the respective electronic appliances;
further, said accounting processing unit is provided with a function manager identification data managing unit for managing function manager identification data to identify a manager of the respective functions of said electronic appliance; and
said accounting processing system performs an accounting processing by using said electronic appliance function identification data in such a manner that said accounting processing system receives said electronic appliance function identification data and function embedding data which is information on the embedding of the function from said electronic appliance, said accounting processing system associates said electronic appliance function identification data with said function manager identification data and said accounting processing system selects an accounting processing method according to said function manager identification data.

17. An accounting processing method for performing an accounting processing for a service to be realized by an electronic appliance comprising the steps of:
offering various services to a user;
managing various service offering functions belonged to said electronic appliance; and
selecting an appropriate accounting method according to said service offering function and performing an accounting processing.

18. A recording medium in which an accounting processing program for performing an accounting processing for a service to be realized by an electronic appliance is recorded, comprising the steps of:
offering various services to a user;
managing various service offering functions belonged to said electronic appliance; and
selecting an appropriate accounting method according to said service offering function and performing an accounting processing.

19. An accounting processing program for performing an accounting processing for a service to be realized by an electronic appliance, the program causing a computer to execute the steps of:
offering various services to a user;
managing various service offering functions belonged to said electronic appliance; and
selecting an appropriate accounting method according to said service offering function and performing an accounting process.
